(19) **Europäisches Patentamt / European Patent Office / Office européen des brevets**

(11) **EP 4 116 898 A1**

(12) # EUROPEAN PATENT APPLICATION
published in accordance with Art. 153(4) EPC

(43) Date of publication:
**11.01.2023 Bulletin 2023/02**

(21) Application number: **20922864.2**

(22) Date of filing: **05.03.2020**

(51) International Patent Classification (IPC):
**G06Q 10/06** (2012.01)　　　**G06F 40/247** (2020.01)

(52) Cooperative Patent Classification (CPC):
**G06Q 10/06393; G06Q 10/06;** G06F 40/247

(86) International application number:
**PCT/JP2020/009412**

(87) International publication number:
**WO 2021/176648 (10.09.2021 Gazette 2021/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **YANASE, Takashi**
  **Kawasaki-shi, Kanagawa 211-8588 (JP)**
• **ASAI, Tatsuya**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **DOCUMENT EVALUATION PROGRAM, DOCUMENT EVALUATION METHOD, AND DOCUMENT EVALUATION DEVICE**

(57) To offer document evaluation in consideration of the diversity of attributes of documents.

A document evaluation apparatus acquires multiple judgement rules, each of which associates a condition for values of one or more characteristic variables with a document evaluation result, the one or more characteristic variables being amongst multiple characteristic variables that includes one or more first characteristic variables each indicating an occurrence frequency of words in a document and one or more second characteristic variables each indicating an attribute of a business operation corresponding to a document. The document evaluation apparatus calculates values of the characteristic variables corresponding to an evaluation subject document, and selects, amongst the judgement rules, a judgement rule whose condition matches the calculated values of the evaluation subject document and includes at least one of the one or more first characteristic variables. The document evaluation apparatus generates an evaluation result of the evaluation subject document based on the selected judgement rule.

| | CATEGORY | BLOG ARTICLE CREATION |
|---|---|---|
| NON-LINGUISTIC ATTRIBUTE | CATEGORY | |
| | ORDERING PRICE | ¥150 |
| | DELIVERY TIME | 1 DAY |
| LINGUISTIC CHARACTERISTIC | LENGTH | 150 |
| | ADVERB COUNT | 4 |
| | CONJUNCTION COUNT | 2 |
| | PROHIBITED EXPRESSION COUNT | 6 |

(145)

| HYPOTHESIS | IMPORTANCE |
|---|---|
| BLOG ARTICLE CREATION ∧ CONJUNCTION COUNT ≦2 → MANY | 0.85 |
| BLOG ARTICLE CREATION ∧ DELIVERY TIME ≦2 DAYS ∧ PROHIBITED EXPRESSION COUNT ≧4 → FEW | 0.80 |
| DATA COLLECTION ∧ ORDERING PRICE ≦¥100 ∧ LENGTH ≧250 → FEW | 0.70 |
| DATA COLLECTION ∧ DELIVERY TIME ≦2 DAYS ∧ CONJUNCTION COUNT ≧5 → MANY | 0.65 |
| BLOG ARTICLE CREATION ∧ ORDERING PRICE ≧¥100 → MANY | 0.50 |
| … | … |

(144)

HYPOTHESES MATCHING EVALUATION SUBJECT DOCUMENT

FIG. 13

EP 4 116 898 A1

**Description**

Technical Field

The embodiments discussed herein relate to a program, method, and apparatus for document evaluation.

Background Art

It is a common practice that a document concerning a business operation, created by a user, is read by other people. At this time, whether the business operation is implemented smoothly may be affected by the impressions that the readers have received from the document, and thus may depend on the quality of the document. For example, in the case of creating a document for recruiting applicants, the writing style of the document may have an influence on the number of applicants. In the case of creating a document that proposes a business operation plan, the writing style of the document may affect the impressions of members of a review session for which the proposal document is submitted, and thus may have an influence on whether the proposal document is approved or rejected.

As a means of handling such problems, an information processing system for evaluating documents created by users is sometimes established. For example, the information processing system conducts document evaluation under preliminarily prepared judgement rules for obtaining an evaluation value for a document based on the occurrence of certain types of words in the document. Such judgment rules may be created manually or through machine learning.

As an example of document processing technique using machine learning, there is a proposed learning apparatus that generates a neural network for calculating the similarly of two sentences from training data which includes positive examples each representing a pair of similar sentences and negative examples each representing a pair of dissimilar sentences.

Citation List

Patent Literature

PTL1: Japanese Laid-open Patent Publication No. 2017-10249

Summary of Invention

Technical Problem

However, the same document may still give readers different impressions depending on the attributes of a business operation that are the premise of construing the document. For example, the impression of the writing style of the document may change depending on the category of the operation. In addition, documents concerning operations with small budgets or short delivery times may give a bad impression while those with large budgets or long delivery times may give a good impression.

In this respect, the use of common judgement rules irrespective of attributes of a business operation results in a less accurate document evaluation. On the other hand, the preparation of judgement rules for each attribute value leads to increased costs. Manual creation of the judgement rules causes a creator of the rules to assume a heavy burden. Generation of the judgement rules by machine learning entails a sufficient amount of sample documentation for each attribute value, thus involving a substantial burden of data preparation.

One aspect of the embodiments is to provide a program, method, and apparatus for document evaluation, offering document evaluation in consideration of the diversity of attributes of documents.

Solution to Problem

According to an aspect, there is provided a document evaluation program that causes a computer to execute the following process: acquiring a plurality of judgement rules, each of which associates a condition for values of one or more characteristic variables with a document evaluation result, the one or more characteristic variables being amongst a plurality of characteristic variables that includes one or more first characteristic variables each indicating an occurrence frequency of words in a document and one or more second characteristic variables each indicating an attribute of a business operation corresponding to a document; calculating values of the plurality of characteristic variables corresponding to an evaluation subject document; selecting, amongst the plurality of judgement rules, a judgement rule whose condition matches the calculated values of the evaluation subject document and includes at least one of the one or more first characteristic variables; and generating an evaluation result of the evaluation subject document based on the selected judgement rule.

According to another aspect, there is provided a document evaluation method executed by a computer. According to yet another aspect, there is provided a document evaluation apparatus including a storing unit and a processing unit.

Advantageous Effects of Invention

According to an aspect, it is possible to offer document evaluation in consideration of the diversity of attributes of documents.

These and other objects, features and advantages of the present invention will become apparent from the following detailed description of illustrative embodiments thereof, which is to be read in connection with the accompanying drawings.

Brief Description of Drawings

[FIG. 1] FIG. 1 illustrates an example of a document evaluation apparatus according to a first embodiment;

[FIG. 2] FIG. 2 illustrates an example of hardware of a document evaluation apparatus according to a second embodiment;

[FIG. 3] FIG. 3 illustrates a first document example;

[FIG. 4] FIG. 4 illustrates a second document example;

[FIG. 5] FIG. 5 illustrates a third document example;

[FIG. 6] FIG. 6 illustrates an example of an ordering management table;

[FIG. 7] FIG. 7 illustrates a first example of a training data table;

[FIG. 8] FIG. 8 illustrates a fourth document example;

[FIG. 9] FIG. 9 illustrates a second example of the training data table;

[FIG. 10] FIG. 10 illustrates an example of a hypothesis table;

[FIG. 11] FIG. 11 illustrates a fifth document example;

[FIG. 12] FIG. 12 illustrates an example of characteristics data;

[FIG. 13] FIG. 13 illustrates an example of selection of hypotheses matching an evaluation subject document;

[FIG. 14] FIG. 14 illustrates an example of calculating an evaluation value;

[FIG. 15] FIG. 15 illustrates an example of a correction screen;

[FIG. 16] FIG. 16 is a block diagram illustrating an example of functions of the document evaluation apparatus;

[FIG. 17] FIG. 17 is a flowchart illustrating an example of a model generation procedure;

[FIG. 18] FIG. 18 is a flowchart illustrating the example of the model generation procedure, continuing from FIG. 17;

[FIG. 19] FIG. 19 is a flowchart illustrating an example of a document evaluation procedure; and

[FIG. 20] FIG. 20 is a flowchart illustrating the example of the document evaluation procedure, continuing from FIG. 19.

Description of Embodiments

Several embodiments will be described below with reference to the accompanying drawings.

1. First Embodiment

A first embodiment is described hereinafter.

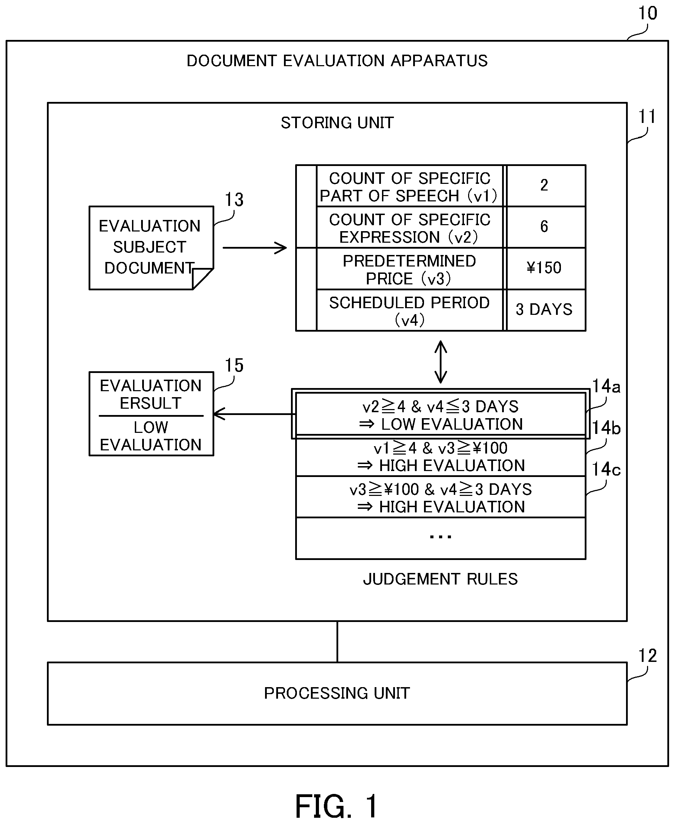

FIG. 1 illustrates an example of a document evaluation apparatus according to the first embodiment.

A document evaluation apparatus 10 of the first embodiment evaluates a document in consideration of differences in attributes of business operations. The document evaluation apparatus 10 may be a client device or server device. The document evaluation apparatus 10 may be referred to, for example, as computer, information processor, or machine learning device.

The document evaluation apparatus 10 includes a storing unit 11 and a processing unit 12. The storing unit 11 may be volatile semiconductor memory such as random access memory (RAM), or a non-volatile storage device such as a hard disk drive (HDD) or flash memory. The processing unit 12 is, for example, a processor such as a central processing unit (CPU), graphics processing unit (GPU), or digital signal processor (DSP). Note however that the processing unit 12 may include an electronic circuit designed for specific use, such as an application specific integrated circuit (ASIC) or field programmable gate array (FPGA). The processor executes programs stored in memory such as RAM (or the storing unit 11). The term "multiprocessor", or simply "processor", may be used to refer to a set of multiple processors.

The storing unit 11 stores therein an evaluation subject document 13. The evaluation subject document 13 includes text written in a natural language. The text is character strings including multiple words. The storing unit 11 also stores therein multiple judgement rules including judgement rules 14a, 14b, and 14c. Each of the multiple judgement rules associates a condition of one or more characteristic variables with the evaluation result of a document. The characteristic variables are sometimes referred to as explanatory variables while the evaluation result is sometimes referred to as a target variable.

The judgement rules 14a, 14b, and 14c are generated in advance, for example, by machine learning. A condition prescribed by each of the judgement rules 14a, 14b, and 14c is a numerical condition specified for, amongst multiple characteristic variables, one characteristic variable or a combination of two or more characteristic variables. The multiple characteristic variables include one or more characteristic variables each indicating an occurrence frequency of words in a document (first characteristic variables) and one or more characteristic variables each indicating an attribute of a business operation corresponding to a document (second characteristic variables). The former characteristic variables may be referred to as linguistic characteristics while the latter may be referred to as non-linguistic attributes.

Examples of the linguistic characteristics include the length of text, such as the total character count and the total word count; the word count of specific parts of speech, such as conjunction and adverb; and the expression count of specific types, such as request expressions, prohibited expressions, and numerical expressions. Examples of the non-linguistic attributes include a category of a business operation; a predetermined price, such as an ordering price and budgeted amount; and a scheduled period, such as a delivery time and preparation period. The linguistic characteristics are extracted by analyzing character strings included in a document. The non-linguistic attributes may be extracted from the document itself by interpreting the meaning of the document, or may be extracted from business operation information outside of the document. A business operation corresponding to the document is, for example, one in which the document is used or one proposed by the document. The evaluation result is, for example, a flag indicating either a good or bad document. The evaluation result is obtained, for example, based on results of a corresponding business operation, such as the number of applicants and the acceptance or rejection of a project. For instance, a recruitment document having yielded a large number of applicants is given high evaluation. Similarly, a document proposing a project which has been accepted is given high evaluation.

The processing unit 12 calculates values of multiple characteristic variables corresponding to the evaluation subject document 13. As an example, the processing unit 12 calculates values of characteristic variables $v1$, $v2$, $v3$, and $v4$. The characteristic variables $v1$ and $v2$ are linguistic characteristics while the characteristic variables $v3$ and $v4$ are non-linguistic attributes. The characteristic variable $v1$ represents the word count of a specific part of speech. The characteristic variable $v2$ represents the count of expressions of a specific type. The characteristic variable $v3$ represents a predetermined price. The characteristic variable $v4$ represents a scheduled period. In this example, the following values of the characteristic variables $v1$ to $v4$ are calculated for the evaluation subject document 13: $v1 = 2$; $v2 = 6$; $v3 = 150$, and $v4 = 3$. Note that the values of the characteristic variables $v3$ and $v4$ may be extracted from business operation information outside of the evaluation subject document 13.

The processing unit 12 searches the multiple judgement rules including the judgement rules 14a, 14b, and 14c for each judgement rule whose condition matches values of the evaluation subject document 13. The processing unit 12 then selects, amongst the found judgment rules, each judgement rule whose condition includes at least one linguistic characteristic. That is to say, judgement rules, each with condition including no linguistic characteristic, are excluded from selection.

As an example, the judgment rule 14a represents that a document satisfying a condition of $v2 \geq 4$ and $v4 \leq 3$ is given low evaluation. The judgement rule 14b represents that a document satisfying a condition of $v1 \geq 4$ and $v3 \geq 100$ is given high evaluation. The judgment rule 14c represents that a document satisfying a condition of $v3 \geq 100$ and $v4 \geq 3$ is given high evaluation. The condition of the characteristic variables $v2$ and $v4$ specified by the judgment rule 14a matches the evaluation subject document 13 and also includes a linguistic characteristic. Therefore, the judgement rule 14a is selected. The condition of the characteristic variables $v1$ and $v3$ specified by the judgement rule 14b does not match the evaluation subject document 13 and, therefore, the judgement rule 14b is not selected. The condition of the characteristic variables $v3$ and $v4$ specified by the judgement rule 14c matches the evaluation subject document 13, but includes no linguistic characteristic. As a result, the judgement rule 14c is not selected.

Based on the selected judgement rule, the processing unit 12 generates an evaluation result 15 of the evaluation subject document 13. Assume, for example, that only the judgement rule 14a is selected. In this case, because the judgement rule 14a represents low evaluation, the evaluation result 15 indicates low evaluation. If two or more judgement rules are selected, the processing unit 12 may generate the evaluation result 15 based on the ratio of the number of judgement rules with high evaluation to the number of judgement rules with low evaluation. If each judgement rule is given a degree of importance, the processing unit 12 may generate the evaluation result 15 based on the ratio of the importance of judgement rules with high evaluation to the importance of judgement rules with low evaluation.

The document evaluation apparatus 10 of the first embodiment defines a set of characteristic variables that includes both characteristic variables each indicating the occurrence frequency of words and characteristic variables each indicating an attribute of a business operation concerned, and creates individual judgment rules using all or part of the set of characteristic variables. Subsequently, one or more judgement rules are selected, each of which matches the evaluation subject document 13 and also includes at least one characteristic variable indicating the occurrence frequency of words. Then, based on the selected judgement rules, the evaluation result 15 is generated.

This allows the evaluation result 15 to be generated in consideration of one or more attributes of a business operation corresponding to the evaluation subject document 13. Therefore, the evaluation result 15 thus generated provides higher accuracy than when it is generated based solely on characteristic variables each indicating the occurrence frequency of words regardless of the attributes of the business operation. In addition, the use of the set of characteristic variables that includes both characteristic variables indicating the occurrence frequency of words and characteristic variables indicating attributes of the business operation eliminates the need of preparing different judgement rules for each attribute value, which results in reduced cost of judgement rule generation. In the case of generating the judgement rules by machine learning, it is possible to reduce the volume of sample documents prepared for machine learning.

When using the above-described set of characteristic variables, the generated judgement rules may include those with no characteristic variable indicating the occurrence frequency of words. These judgement rules make an evaluation based solely on attributes of the business operation and thus do not provide evaluation on the writing style of the evaluation subject document 13. In this respect, judgement rules with no characteristic variable indicating the occurrence frequency of words are excluded in generating the evaluation result 15. Herewith, the evaluation result 15 provides higher accuracy.

2. Second Embodiment

A second embodiment is described hereinafter.

A document evaluation apparatus of the second embodiment generates a model for document evaluation by machine learning and calculates an evaluation value of an evaluation subject document using the generated model. The document evaluation apparatus may be a client device or server device. The document evaluation apparatus may be referred to, for example, as computer, information processor, or machine learning device. According to the second embodiment, a single apparatus performs both model generation and document evaluation; however, these procedures may be performed separately by different apparatuses.

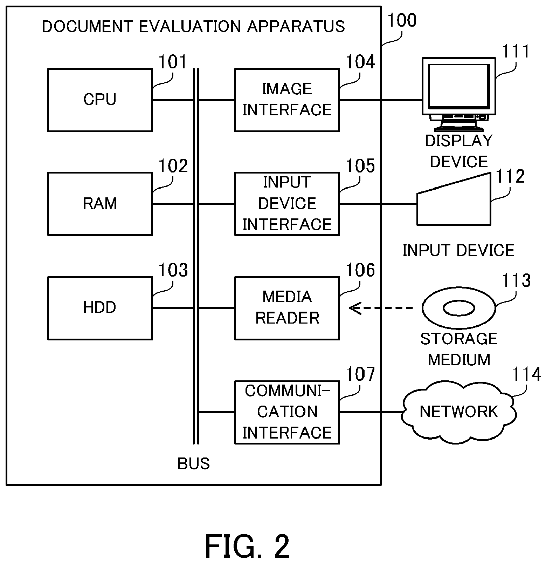

FIG. 2 illustrates an example of hardware of a document evaluation apparatus according to the second embodiment.

A document evaluation apparatus 100 of the second embodiment includes a CPU 101, a RAM 102, an HDD 103, an image interface 104, an input device interface 105, a media reader 106, and a communication interface 107. These units of the document evaluation apparatus 100 are individually connected to a bus. Note that the document evaluation apparatus 100 corresponds to the document evaluation apparatus 10 of the first embodiment. The CPU 101 corresponds to the processing unit 12 of the first embodiment. The RAM 102 or the HDD 103 corresponds to the storing unit 11 of the first embodiment.

The CPU 101 is a processor configured to execute program instructions. The CPU 101 reads out at least part of programs and data stored in the HDD 103, loads them into the RAM 102, and executes the loaded programs. Note that the CPU 101 may include two or more processor cores and the document evaluation apparatus 100 may include two or more processors. The term "multiprocessor", or simply "processor", may be used to refer to a set of processors.

The RAM 102 is volatile semiconductor memory for temporarily storing therein programs to be executed by the CPU 101 and data to be used by the CPU 101 for its computation. The document evaluation apparatus 100 may be provided with a different type of memory other than RAM, or may be provided with two or more memory devices.

The HDD 103 is a non-volatile storage device to store therein software programs, such as an operating system (OS), middleware, and application software, and various types of data. The document evaluation apparatus 100 may be provided with a different type of storage device, such as flash memory or a solid state drive (SSD), or may be provided with two or more storage devices.

The image interface 104 produces video images in accordance with drawing commands from the CPU 101 and displays them on a screen of a display device 111 coupled to the document evaluation apparatus 100. The display device 111 may be any type of display, such as a cathode ray tube (CRT) display; a liquid crystal display (LCD); an organic electro-luminescence (OEL) display, or a projector. An output device, such as a printer, other than the display device 111 may also be connected to the document evaluation apparatus 100.

The input device interface 105 receives an input signal from an input device 112 connected to the document evaluation apparatus 100. Various types of input devices may be used as the input device 112, for example, a mouse, a touch panel, a touch-pad, or a keyboard. A plurality of types of input devices may be connected to the document evaluation apparatus 100.

The media reader 106 is a device for reading programs and data recorded on a storage medium 113. Various types of storage media may be used as the storage medium 113, for example, a magnetic disk such as a flexible disk (FD) or an HDD, an optical disk such as a compact disc (CD) or a digital versatile disc (DVD), and semiconductor memory. The media reader 106 copies the programs and data read out from the storage medium 113 to a different storage medium, for example, the RAM 102 or the HDD 103. The read programs are executed, for example, by the CPU 101. Note that the storage medium 113 may be a portable storage medium and used to distribute the programs and data. In addition, the storage medium 113 and the HDD 103 are sometimes referred to as computer-readable storage media.

The communication interface 107 is connected to a network 114 and communicates with different information processors via the network 114. The communication interface 107 may be a wired communication interface connected to a wired communication device, such as a switch or router, or may be a wireless communication interface connected to a wireless communication device, such as a base station or access point.

Document evaluation is described next.

The document evaluation apparatus 100 evaluates business operation documents, such as crowdsourcing ordering documents and project proposal documents. Each crowdsourcing ordering document evaluated by the document evaluation apparatus 100 is a document for widely recruiting contractors for work from outside a company, read by people outside the company. Whether the number of applicants is high or low may depend on how good or bad the crowdsourcing ordering document is written. Each project proposal document evaluated by the document evaluation apparatus 100 is a document for proposing a project inside a company, read by people inside the company who decide on the acceptance or rejection of the project. Whether the project is accepted or rejected may depend on how good or bad the project proposal document is written.

The document evaluation apparatus 100 extracts linguistic characteristics from an evaluation subject document through natural language analysis and calculates an evaluation value using the linguistic characteristics. The linguistic characteristics mainly represent the occurrence frequencies of words each satisfying a specified condition. The linguistic characteristics may include the length of text, such as the total character count and the total word count. Overlong documents are likely to give readers a negative impression. The linguistic characteristics may also include the number of occurrences of specific parts of speech, such as the adverb count and the conjunction count. Documents with too many adverbs and conjunctions may be hard to read and are, therefore, likely to give readers a negative impression.

In addition, the linguistic characteristics may include the passive voice count. Documents with too many passive voices may lead to increased ambiguity and are, therefore, likely to give readers a negative impression. Further, the linguistic characteristics may include the number of request expressions representing requests made to readers and the prohibited expression count representing prohibitions made to readers. Documents with too many requests or prohibited expressions may impose additional operational burdens and are, therefore, likely to give readers a negative impression.

Note however that the evaluation of the evaluation subject document is not always made solely based on the linguistic characteristics, and may be influenced by non-linguistic attributes. The non-linguistic attributes are attributes of a business operation corresponding to the evaluation subject document, and represent features other than the occurrence frequencies of words. In other words, the non-linguistic attributes represent a usage situation and preconditions of the evaluation subject document. The non-linguistic attributes may be written in the evaluation subject document or recorded in business operation information external to the evaluation subject document.

The non-linguistic attributes may include a business operation category. The non-linguistic attributes may also include planned amounts of money, such as an ordering price and a budgeted amount. Even if both documents, each corresponding to a large-scale operation and to a small-scale operation, contain the same number of request or prohibited expressions, the expression count may give a more negative impression in the document of the small-scale operation while causing no problem in the document of the large-scale operation. Further, the non-linguistic attributes may include scheduled periods, such as a delivery time and a preparation period. Even if both documents, each corresponding to an operation with a long delivery time and to an operation with a short delivery time, contain the same number of request or prohibited expressions, the expression count may give a more negative impression in the document of the short delivery-time operation while causing no problem in the document of the long delivery-time operation. Thus, evaluation subject documents sharing the same linguistic characteristics may receive different evaluations when their non-linguistic attributes are different.

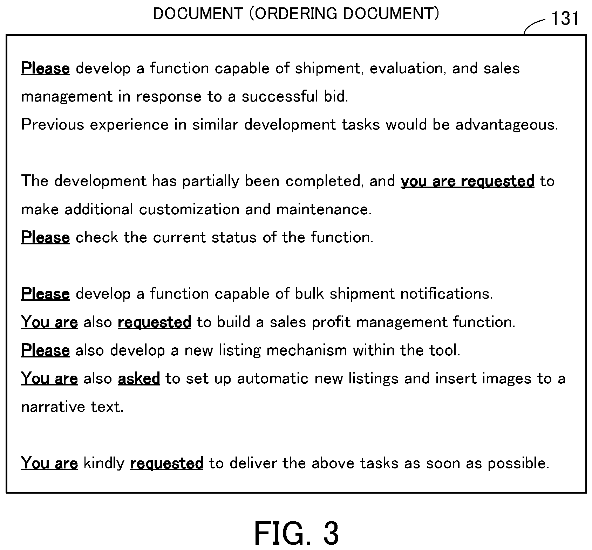

FIG. 3 illustrates a first document example.

A document 131 is an example of a crowdsourcing ordering document. The document 131 includes eight request expressions, such as "please" and "you are requested to". In addition, the delivery time of a task requested in the document 131 is short.

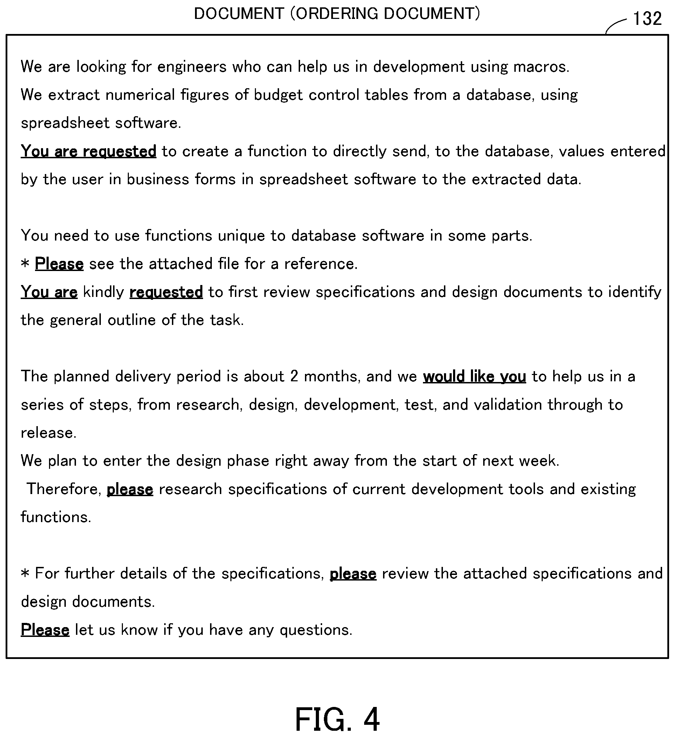

FIG. 4 illustrates a second document example.

A document 132 is an example of a crowdsourcing ordering document as with the document 131. The document 132 includes seven request expressions, such as "you are requested to" and "please see". Note that the delivery time of a task requested in the document 132 is long.

Assume here that a judgement rule of "the number of orders received is small when 5 or more request expressions are included" is set. Both the documents 131 and 132 are given low evaluation because they are determined to receive a small number of orders under the judgement rule. In this respect, the evaluation result of the document 131 is reasonable because the readers are likely to feel that the associated task involves many requests in spite of the short delivery time. On the other hand, since the task associated with the document 132 is a large-scale work with a long delivery time, the readers may feel that the many requests are, in fact, specific and easy-to-understand instructions. Hence, the evaluation result of the document 132 is not appropriate.

Thus, the readers may have different impressions depending on attributes of a business operation that are the premise of an evaluation subject document. It is preferable that the document evaluation apparatus 100 calculate the evaluation value of the evaluation subject document also in consideration of non-linguistic attributes. In view of this, the document evaluation apparatus 100 uses both linguistic characteristics and non-linguistic attributes as explanatory variables in generating a model by machine learning.

Next described is preparation of training data for machine learning.

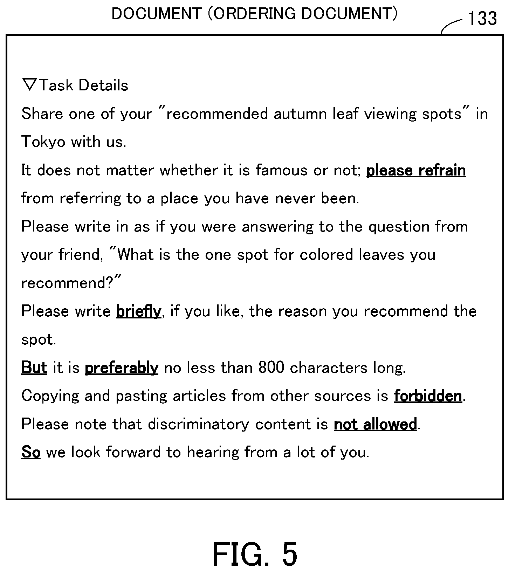

FIG. 5 illustrates a third document example.

A document 133 is an example of a crowdsourcing ordering document created in the past. To generate a model for evaluating a crowdsourcing ordering document, multiple crowdsourcing ordering documents created in the past are used. In evaluation of a crowdsourcing ordering document, the length, the adverb count, the conjunction count (here, the count of conjunctions placed at the start of a sentence), and the prohibited expression count are used as linguistic characteristics, as described later. The document 133 includes two adverbs of "briefly" and "preferably". The document 133 also includes two conjunctions of "but" and "and" each placed at the start of a sentence. In addition, the document 133 includes three prohibited expressions of "please refrain", "forbidden", and "not allowed".

The document evaluation apparatus 100 uses a natural language processing technique, such as a morphological analysis, to extract these linguistic characteristics from the document 133. For example, the document evaluation apparatus 100 divides the document 133 into words and determines a part of speech for each word with reference to dictionaries. Then, the document evaluation apparatus 100 counts the number of adverbs and the number of conjunctions placed at the start of a sentence. In addition, the document evaluation apparatus 100 detects prohibited expressions with reference to dictionaries enumerating patterns of prohibited expressions and counts the detected prohibited expressions.

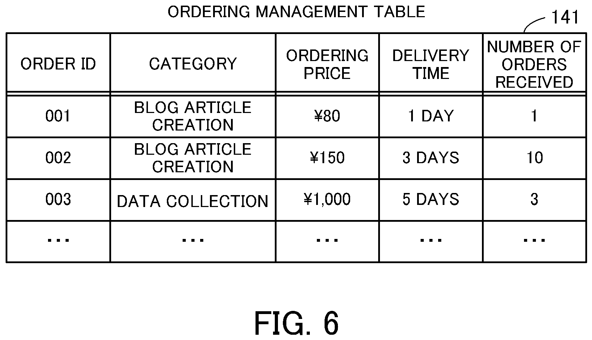

FIG. 6 illustrates an example of an ordering management table.

An ordering management table 141 is stored external to crowdsourcing ordering documents, such as the document 133, to manage crowdsourcing operations. To generate a model for evaluating a crowdsourcing ordering document, business operation information corresponding to multiple crowdsourcing ordering documents created in the past are used. The ordering management table 141 includes items of "order ID", "category", "ordering price", "delivery time", and "number of orders received".

Each field under the item "order ID" contains an identifier for identifying a crowdsourcing task. Each field under the item "category" contains a type of the corresponding task contracted out to a crowdsourcing provider (contractor). Each field under the item "ordering price" contains the amount of consideration to be paid to the contractor. Each field under the item "delivery time" contains the number of days from an order placement to a delivery date of deliverables. Each field under the item "number of orders received" contains the number of final contractors for the corresponding task. The order ID, category, ordering price, and delivery time are decided in advance before a corresponding crowdsourcing ordering document is released to the public while the number of orders received is calculated after the posting period of the crowdsourcing ordering document expires.

An evaluation of each crowdsourcing ordering document is determined according to the number of orders received. The number of orders received being greater than or equal to a threshold means that there were many orders received, which in turn means that the crowdsourcing ordering document received high evaluation. On the other hand, the number of orders received falling below the threshold means that there were few orders, which in turn means that the crowdsourcing ordering document was given low evaluation. The threshold for the number of orders received is decided in advance, for example, five orders.

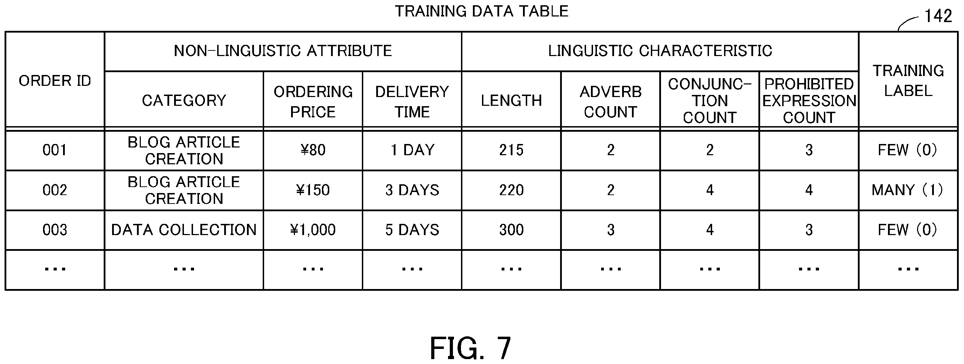

FIG. 7 illustrates a first example of a training data table.

A training data table 142 is training data created, in generating a model for evaluating a crowdsourcing ordering document, from past crowdsourcing ordering documents, such as the document 133, and the ordering management table 141. The training data table 142 includes items of "order ID", "non-linguistic attribute", "linguistic characteristic", and "training label". The item "non-linguistic attribute" further includes sub-items of "category", "ordering price", and "delivery time". The item "linguistic characteristic" further includes sub-items of "length", "adverb count", "conjunction count", and "prohibited expression count".

Each field under the item "order ID" contains a corresponding order ID listed in the ordering management table 141. Each field under the item "category" contains a corresponding category listed in the ordering management table 141. Each field under the item "ordering price" contains a corresponding ordering price listed in the ordering management table 141. Each field under the item "delivery time" contains a corresponding delivery time listed in the ordering management table 141. The document evaluation apparatus 100 extracts these non-linguistic attributes from the ordering management table 141.

Each field under the item "length" contains the number of characters or words included in a corresponding crowdsourcing ordering document. Each field under the item "adverb count" contains the number of adverbs included in the corresponding crowdsourcing ordering document. Each field under the item "conjunction count" contains the conjunction count included in the corresponding crowdsourcing ordering document. Each field under the item "prohibited expression count" contains the prohibited expression count included in the corresponding crowdsourcing ordering document. The document evaluation apparatus 100 extracts these linguistic characteristics from the crowdsourcing ordering documents themselves.

Each field under the item "training label" contains a flag indicating the volume of orders associated with the corresponding crowdsourcing ordering document. When the number of orders listed in the ordering management table 141 is greater than or equal to a threshold (for example, 5 orders or more), a training label indicating many orders is registered. When the number of orders of the ordering management table 141 falls below the threshold, a training label indicating few orders is registered. The training label is, for example, a value of 0 or 1. Here, the training label indicating many orders is 1 while the training label indicating few orders is 0.

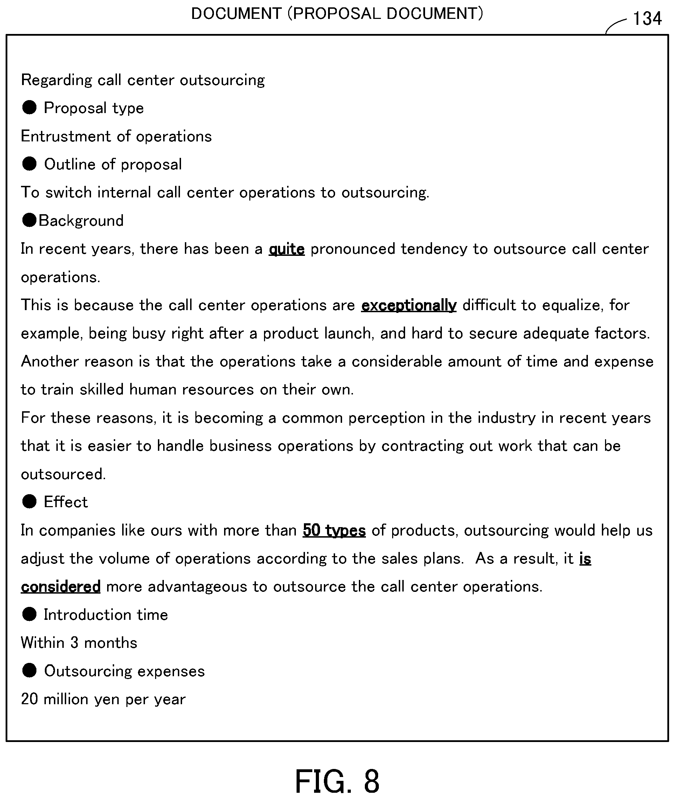

FIG. 8 illustrates a fourth document example.

A document 134 is an example of a project proposal document created in the past. To generate a model for evaluating a project proposal document, multiple project proposal documents created in the past are used. The project proposal documents are written in a predetermined format including header items, such as proposal type, outline of proposal, background, effect, introduction time, and outsourcing expenses. Assume in this case that the text of the outline of proposal, the background, and the effect is subject to evaluation.

In evaluation of a project proposal document, the length, the adverb count, the passive voice count, and the numerical expression count are used as linguistic characteristics, as described later. The document 134 includes two adverbs, "quite" and "exceptionally". The document 134 also includes one passive voice, "is considered". Further, the document 134 includes one numerical expression of "50 types". The document evaluation apparatus 100 uses a natural language processing technique, such as a morphological analysis, to extract these linguistic characteristics from the document 134. For example, the document evaluation apparatus 100 divides the document 134 into words and detects adverbs, passive voices, and numerical values with reference to dictionaries and counts them.

The evaluation of a project proposal document also uses the category, the budgeted amount, and the preparation period as non-linguistic attributes, as described later. These non-linguistic attributes are written in the document 134. As for the document 134, the category is "entrustment of operations" written under the header item "proposal type". The budgeted amount is "20 million yen" written under the header item "outsourcing expenses". The preparation period is "3 months" written under the header item "introduction time". The document evaluation apparatus 100 has in advance information on under which header item in the project proposal document format each non-linguistic attribute is written. This allows the document evaluation apparatus 100 to automatically extract the non-linguistic attributes from the document 134.

Note however that, non-linguistic attributes may be extracted from business operation information of the document 134 if the business operation information is stored external to the document 134, as in the case of the above-mentioned ordering management table 141. In addition, the acceptance or rejection result of the project is registered in the business operation information external to the document 134. The evaluation of each project proposal document is made based on the acceptance or rejection of the project. The acceptance of the project means that the project proposal document is given high evaluation. On the other hand, the rejection of the project means that the project proposal document is given low evaluation.

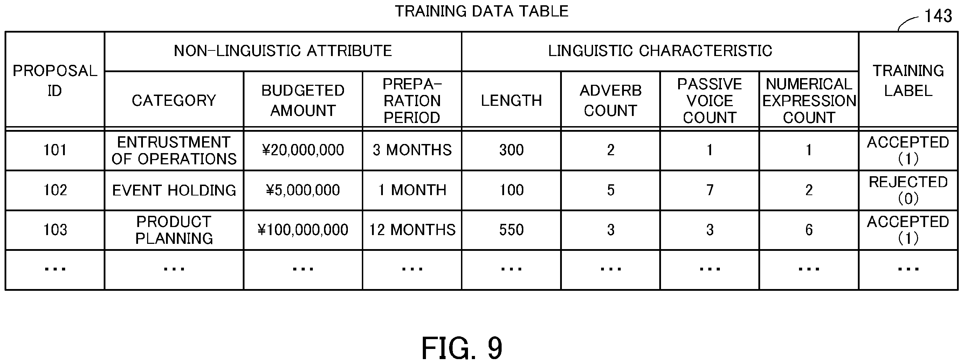

FIG. 9 illustrates a second example of the training data table.

A training data table 143 is training data created, in generating a model for evaluating a project proposal document, from past project proposal documents, such as the document 134, and the acceptance or rejection results of associated projects. The training data table 143 includes items of "proposal ID", "non-linguistic attribute", "linguistic characteristic", and "training label". The item "non-linguistic attribute" further includes sub-items of "category", "budgeted amount", and "preparation period". The item "linguistic characteristic" further includes sub-items of "length", "adverb count", "passive voice count", and "numerical expression count".

Each field under the item "proposal ID" contains an identifier for identifying a project proposal. Each field under the item "category" contains the proposal type written in a corresponding project proposal document. Each field under the item "budgeted amount" contains the planned amount of money written in the corresponding project proposal document. Each field under the item "preparation period" contains the scheduled period written in the corresponding project proposal document. Each field under the item "length" contains the number of characters or words of a part to be evaluated ("evaluation subject part"), included in the corresponding project proposal document. Each field under the item "adverb count" contains the number of adverbs included in the evaluation subject part of the corresponding project proposal document. Each field under the item "passive voice count" contains the number of passive voices included in the evaluation subject part of the corresponding project proposal document. Each field under the item "numerical expression count" contains the number of numerical expressions included in the evaluation subject part of the corresponding project proposal document. The document evaluation apparatus 100 extracts these non-linguistic attributes and linguistic characteristics from project proposal documents. Each field under the item "training label" contains a flag indicating whether the corresponding project has been accepted or rejected. The training label is, for example, a value of 0 or 1. Each training label assigned a flag of 1 indicates that its corresponding proposal was accepted while each training label assigned a flag of 0 indicates that its corresponding proposal was rejected.

Next described is machine learning for generating a model from training data. Note that the following description is based on the aforementioned training data table 142 generated from crowdsourcing ordering documents.

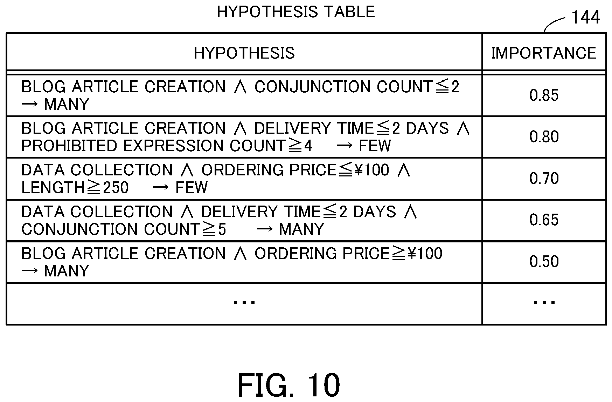

FIG. 10 illustrates an example of a hypothesis table.

A hypothesis table 144 represents a model generated by machine learning. The hypothesis table 144 registers therein multiple records representing multiple hypotheses. The hypotheses may also be referred to as chunks or rules. Each of the hypotheses includes a hypothesis part and a conclusion part.

The hypothesis part indicates a condition that, amongst a set of explanatory variables including linguistic characteristics and non-linguistic attributes, one or more explanatory variables need to satisfy. Some hypotheses include only one explanatory variable in the hypothesis part, and others include two or more explanatory variables therein. In addition, the hypothesis part may include linguistic characteristics only or non-linguistic attributes only, or may include both linguistic characteristics and non-linguistic attributes. In many hypotheses, the hypothesis part includes two or more explanatory variables which are a mix of both linguistic characteristics and non-linguistic attributes.

The conclusion part is a target variable that represents an evaluation result of a document. The conclusion part represents the estimation of the evaluation result of a document that fits the hypothesis part. The evaluation result is a flag indicating the quality of the document. In the case of a crowdsourcing ordering document, the evaluation result is either many orders or few orders. In the hypothesis table 144, each of the hypotheses is given a degree of importance. Higher importance means higher validity of the corresponding hypothesis.

The hypothesis table 144 includes, for example, a hypothesis that many orders are received (high evaluation) when the category is blog article creation and the conjunction count is 2 or less. This hypothesis has an importance of 0.85. Another hypothesis in the hypothesis table 144 is that few orders are received (low evaluation) when the category is blog article creation, the delivery time is two days or less, and the prohibited expression count is 4 or more. This hypothesis has an importance of 0.80. Yet another hypothesis included therein is that few orders are received when the category is data collection, the ordering price is 100 yen or less, and the length is 250 or more. This hypothesis has an importance of 0.70. Yet another hypothesis included therein is that many orders are received when the category is data collection, the delivery time is 2 days or less, and the conjunction count is 5 or more. This hypothesis has an importance of 0.65. Yet another hypothesis included therein is that many orders are received when the category is blog article creation and the ordering price is 100 yen or more. This hypothesis has an importance of 0.50.

The hypothesis table 144 described above may be generated from the training data table 142, using Wide Learning (registered trademark), which is a machine learning algorithm. Model generation using Wide Learning is described next.

In Wide Learning, hypotheses (chunks) each likely to hold between a combination of values of several explanatory variables and a value of the target variable are exhaustively generated. Then, amongst the great number of hypotheses thus generated, reliable hypotheses are adopted based on training data, and a set of the adopted hypotheses constitutes a model. Each of the hypotheses is an implicational logical proposition for deriving the value of the target variable from the values of the explanatory variables.

The term "hit count" of each hypothesis refers to the number of samples, amongst samples included in the training data, which individually match both the values of the explanatory variables specified in the hypothesis part of the hypothesis and the value of the target variable specified in the conclusion part of the hypothesis. Hypotheses with larger number of hits are more reliable. The term "hit rate" of each hypothesis refers to the ratio of samples that match the value of the target variable specified in the conclusion part of the hypothesis among samples that match the values of the explanatory variables specified in the hypothesis part of the hypothesis. Hypotheses with higher hit rates are more reliable. In order to increase the versatility of the model and avoid overtraining, it is preferable to limit the number of explanatory variables included in one hypothesis to a threshold or less. In addition, it is preferable to adopt hypotheses with both hit count and hit rate exceeding or equal to the individual thresholds.

Wide Learning enumerates possible values of each of multiple explanatory variables and possible values of the target variable. As for each explanatory variable that takes continuous values, such as an amount of money, the entire value range is divided into multiple intervals, and the intervals are used as candidate values for the explanatory variable. The divided intervals may have a fixed width, for example, intervals of every 100 yen. Alternatively, the intervals may be dynamically set based on the distribution of the values of the explanatory variable such that samples included in the training data are distributed across multiple intervals as equally as possible. Next, the number of explanatory variables equal to or less than a threshold is selected from the multiple explanatory variables. For example, one or more but three or less explanatory variables are selected. Then, one value is selected for each of the selected explanatory variables and one value is selected for the target variable, to thereby generate one hypothesis. Various hypotheses are comprehensively generated by exhaustively selecting explanatory variables and their values.

Amongst these hypotheses, for example, hypotheses with both hit count and hit rate exceeding or equal to their individual thresholds are adopted as valid hypotheses. Note however that all hypotheses with hit count exceeding or equal to the threshold may be adopted, or all hypotheses with hit rate exceeding or equal to the threshold may be adopted. Instead of setting the thresholds for the hit count and the hit rate, a predetermined number of hypotheses may be adopted in descending order of the hit count and the hit rate.

The degree of importance is calculated for each of the adopted hypotheses. As a measure of the importance, a weight calculated by a logistic regression analysis described below is used. Note however that the hit count or hit rate may be used as a measure of the importance instead.

For a sample x included in the training data, a probability $p(x)$ is calculated using a sigmoid function, as given by Expression (1). The probability $p(x)$ is a real number greater than 0 and less than 1. The probability $p(x)$ corresponds to an estimate of the target variable of the sample x. The closer the probability $p(x)$ is to 1, the higher the possibility that the value of the target variable is 1 (for example, many orders are received), and the closer the probability $p(x)$ is to 0, the higher the possibility that the value of the target variable is 0 (for example, few orders are received). In Expression (1), $\alpha$ is a coefficient treated as a constant term, $\beta_i$ is a coefficient representing the weight of the $i^{th}$ hypothesis, and $\mathrm{chunk}_i(x)$ is an output of the $i^{th}$ hypothesis for the sample x.

$$p(x) = \frac{1}{1 + \exp(-(\alpha + \sum_i \beta_i \times \mathrm{chunk}_i(x)))} \qquad (1)$$

If the hypothesis part of the $i^{th}$ hypothesis and the values of the explanatory variables of the sample x do not match, $\mathrm{chunk}_i(x)$ outputs 0. In this case, the $i^{th}$ hypothesis is independent of the sample x and does not affect the probability $p(x)$. If the hypothesis part of the $i^{th}$ hypothesis matches the values of the explanatory variables of the sample x, $\mathrm{chunk}_i(x)$ outputs 1 or -1. When the conclusion part of the $i^{th}$ hypothesis is 1 (e.g., many orders are received), $\mathrm{chunk}_i(x)$ outputs 1. On the other hand, when the conclusion part of the $i^{th}$ hypothesis is 0 (e.g., few orders are received), $\mathrm{chunk}_i(x)$ outputs -1.

The larger the linear sum of $\mathrm{chunk}_i(x)$, the more hypotheses related to the sample x have estimated the value of the target variable to be 1. On the other hand, the smaller the linear sum of $\mathrm{chunk}_i(x)$, the more hypotheses related to the sample x have estimated the value of the target variable to be 0. Note however that, the probability $p(x)$ changes by changing the coefficients $\alpha$ and $\beta_i$. The difference between the probability $p(x)$ and the true value of the target variable of the sample x is the error. Therefore, the coefficients $\alpha$ and $\beta_i$ are determined by regression analysis such a manner as to minimize the total sum of errors for multiple samples included in the training data. The coefficient $\beta_i$ determined in this manner is the importance of the $i^{th}$ hypothesis.

Next described is a method of document evaluation using a model.

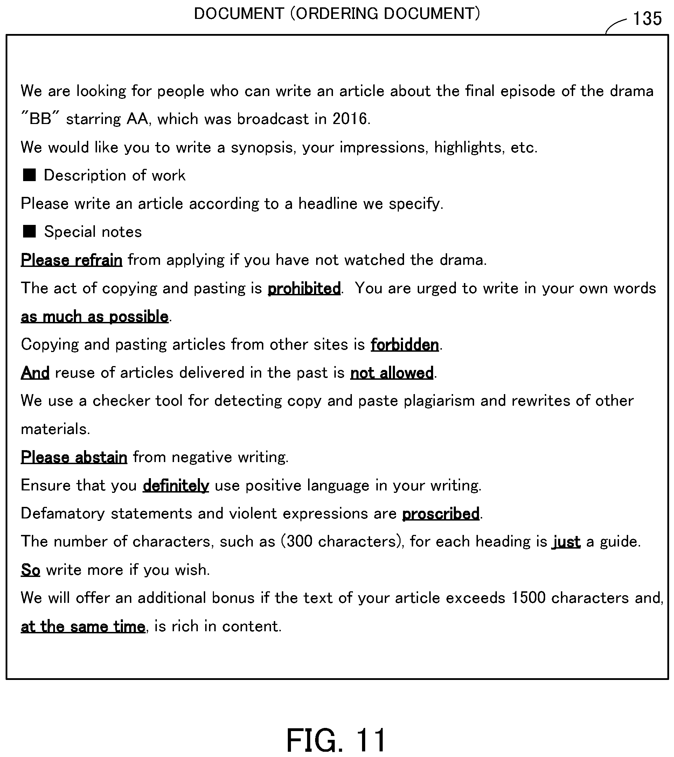

FIG. 11 is a fifth document example.

A document 135 is an example of a crowdsourcing ordering document to be evaluated. The document 135 includes four adverbs of "as much as possible", "definitely", "just", and "at the same time". The document 135 also includes two conjunctions of "and" and "so" each placed at the start of a sentence. In addition, the document 135 includes six prohibited expressions of "please refrain", "prohibited", "forbidden", "not allowed", "please abstain", and "proscribed". Business operation information corresponding to the document 135 is registered in the ordering management table 141. Assume here that the corresponding business operation information indicates that the category is blog article creation, the ordering price is 150 yen, and the delivery time is 1 day.

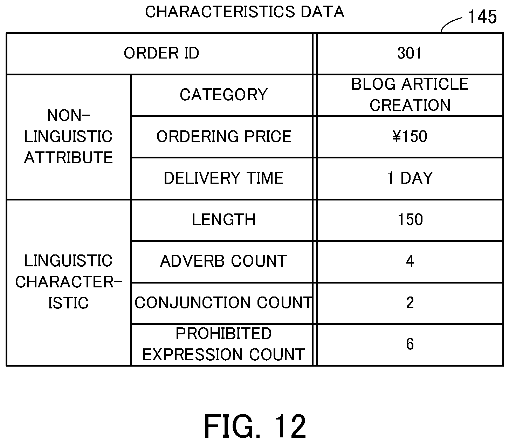

FIG. 12 illustrates an example of characteristics data.

The document evaluation apparatus 100 generates characteristics data 145 from the above-mentioned document 135 and the business operation information registered in the ordering management table 141. The characteristics data 145 includes items of "order ID", "non-linguistic attribute", and "linguistic characteristic". The item "non-linguistic attribute" further includes sub-items of "category", "ordering price", and "delivery time". The item "linguistic characteristic" further includes sub-items of "length", "adverb count", "conjunction count (placed at the beginning of a sentence)", and "prohibited expression count". Entries for the items "order ID", "category", "ordering price", and "delivery time" are extracted from the ordering management table 141. Entries for the items "length", "adverb count", "conjunction count (placed at the beginning of a sentence)", and "prohibited expression count" are extracted from the document 135 using a natural language processing technique.

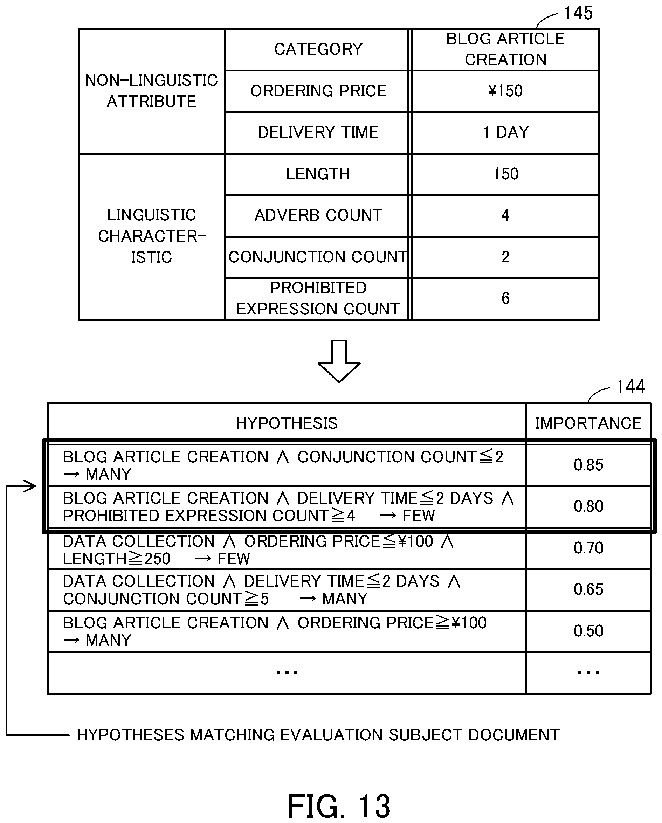

FIG. 13 illustrates an example of selection of hypotheses that match an evaluation subject document.

The document evaluation apparatus 100 searches the hypothesis table 144 for hypotheses applicable to the characteristics data 145. In this connection, the document evaluation apparatus 100 determines, for each hypothesis registered in the hypothesis table 144, whether the characteristics data 145 satisfies the condition specified by the hypothesis part of the hypothesis, and extracts hypotheses each having a matching hypothesis part. Note however that the document evaluation apparatus 100 excludes each hypothesis, the hypothesis part of which includes only non-linguistic attributes and no linguistic characteristics. That is, the document evaluation apparatus 100 selects hypotheses whose hypothesis part has a condition satisfied by the characteristics data 145 and includes at least one linguistic characteristic.

Referring to the hypothesis table 144, for example, the first hypothesis is selected because its hypothesis part fits the characteristics data 145 and includes the conjunction count, which is a linguistic characteristic. The second hypothesis is selected because its hypothesis part fits the characteristics data 145 and includes the prohibited expression count, which is a linguistic characteristic. The third hypothesis is not selected because its hypothesis part does not fit the characteristics data 145. The fourth hypothesis is not selected because its hypothesis part does not fit the characteristics data 145. The fifth hypothesis is not selected because its hypothesis part does not include a linguistic characteristic even though it fits the characteristics data 145. Therefore, the first and second hypotheses of the hypothesis table 144 are selected.

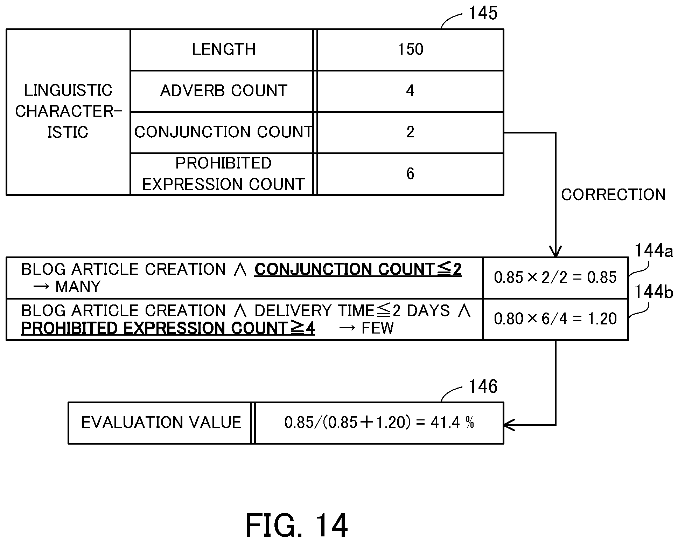

FIG. 14 illustrates an example of calculating an evaluation value.

The document evaluation apparatus 100 calculates the evaluation value of the document 135, which is an evaluation subject document, using the importance of the hypotheses selected from the hypothesis table 144. At this time, the document evaluation apparatus 100 corrects the importance based on linguistic characteristics included in the characteristics data 145.

Specifically, the document evaluation apparatus 100 detects a linguistic characteristic condition clause from the hypothesis part of each of the selected hypotheses, and extracts a threshold from the linguistic characteristic condition clause if it is included therein. The threshold to be extracted here is one included in a condition clause, for example, that the value of the linguistic characteristic is greater than or equal to the threshold, the value of the linguistic characteristic exceeds the threshold, the value of the linguistic characteristic is less than or equal to the threshold, or the value of the linguistic characteristic falls below the threshold. The document evaluation apparatus 100 calculates, as a correction coefficient, the ratio of a corresponding value of the linguistic characteristic found in the characteristics data 145 to the extracted threshold, and multiplies the original importance by the correction coefficient to obtain corrected importance.

Here, the first hypothesis and the second hypothesis selected from the hypothesis table 144 are referred to as a hypothesis 144a and a hypothesis 144b, respectively. The hypothesis part of the hypothesis 144a includes a linguistic characteristic condition clause that the conjunction count is less than or equal to 2. The conjunction count indicated by the characteristics data 145 is 2. Therefore, the correction coefficient is obtained as: 2/2 = 1, and the corrected importance of the hypothesis 144a is obtained as: $0.85 \times 1 = 0.85$. In addition, the hypothesis part of the hypothesis 144b includes a linguistic characteristic condition clause that the prohibited expression count is greater than or equal to 4. The prohibited expression count indicated by the characteristics data 145 is 6. Therefore, the correction coefficient is obtained as: 6/4 = 1.5, and the corrected importance of the hypothesis 144b is obtained as: $0.80 \times 1.5 = 1.20$.

Note that the above-described method of importance correction is premised on each linguistic characteristic that is more favorable if the value is smaller and less favorable if it is larger. It is presumed that the greater the value of each linguistic characteristic exceeds the corresponding threshold, the greater the influence of the linguistic characteristic on the evaluation result. Therefore, in this case, the importance is corrected to be higher. Note however that the importance correction method above is just an example, and a different correction technique may be used. For example, for each linguistic characteristic that is more preferable if the value is larger and less favorable if it is smaller, a correction coefficient used in this case may be obtained by exchanging the numerator and denominator of the correction coefficient used in the above example. Herewith, the less the value of the linguistic characteristic is compared to the corresponding threshold, the higher the importance is corrected.

The document evaluation apparatus 100 calculates an evaluation value 146 of the document 135, which is an evaluation subject document, based on the corrected importance of the selected hypotheses. Specifically, the document evaluation apparatus 100 classifies the selected hypotheses into those with the conclusion part being positive (e.g., many orders are received) and those with the conclusion part being negative (e.g., few orders are received). Then, the document evaluation apparatus 100 calculates total importance Fpos, which is the sum of the corrected importance of the positive hypotheses, and total importance Fneg, which is the sum of the corrected importance of the negative hypotheses. The document evaluation apparatus 100 calculates, as the evaluation value 146, the ratio of the total importance of the positive hypotheses to the entire total importance, i.e., Fpos/(Fpos + Fneg).

In the example depicted in FIG. 14, the hypothesis 144a is a positive hypothesis while the hypothesis 144b is a negative one. Because Fpos = 0.85 and Fneg = 1.20, the evaluation value 146 is obtained as: 0.85/(0.85 + 1.20) = 41.4%. The evaluation value 146 represents the probability of receiving many orders (e.g., 5 orders or more) in response to the document 135. Note that the above method of evaluation value calculation is just an example, and a different calculation technique may be used instead.

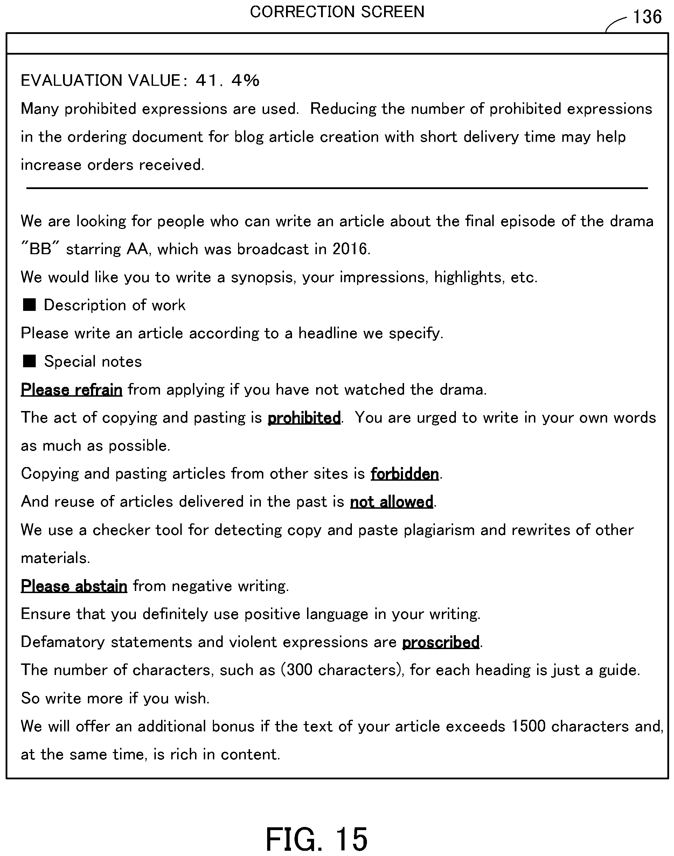

FIG. 15 illustrates an example of a correction screen.

The document evaluation apparatus 100 selects each hypothesis with the conclusion part being negative and extracts each linguistic characteristic included in the hypothesis part of the negative hypothesis. The linguistic characteristic is likely to be responsible for lowering the evaluation value 146 of the document 135. Therefore, the document evaluation apparatus 100 searches the document 135 for words corresponding to the extracted linguistic characteristics and highlights them. If the linguistic characteristic is the adverb count, adverbs included in the document 135 are highlighted. If the linguistic characteristic is the conjunction count, conjunctions included in the document 135 are highlighted. If the linguistic characteristic is the prohibited expression count, prohibited expressions included in the document 135 are highlighted. The document evaluation apparatus 100 also generates evaluation comments for the extracted linguistic characteristic.

The document evaluation apparatus 100 generates a correction screen 136 and displays it on the screen of the display device 111. The correction screen 136 includes the evaluation value 146, the evaluation comments, and the document 135 with some highlighted words. As an example, the negative hypothesis 144b includes a linguistic characteristic condition clause that the prohibited expression count is 4 or more. Inclusion of many prohibited expressions is likely to be responsible for lowering the evaluation value 146. Therefore, evaluation comments are generated to recommend cutting back on the prohibited expressions. On the correction screen 136, the six prohibited expressions in the document 135 are highlighted for emphasis. In this manner, the document 135 is corrected by the document evaluation apparatus 100. Receiving the correction screen 136, the user of the document evaluation apparatus 100 is able to correct the document 135 to increase the number of orders received.

Next described are functions of the document evaluation apparatus 100.

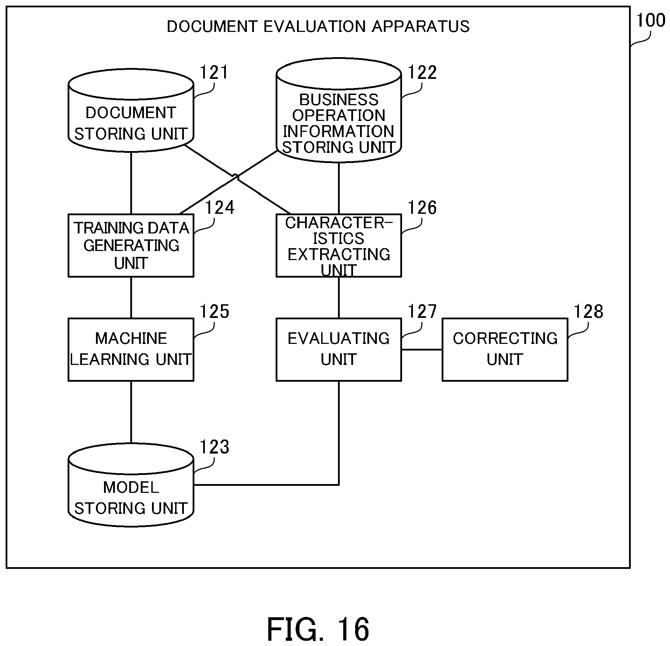

FIG. 16 is a block diagram illustrating an example of functions of the document evaluation apparatus.

The document evaluation apparatus 100 includes a document storing unit 121, a business operation information storing unit 122, and a model storing unit 123. These storing units are implemented using a storage area secured, for example, in the RAM 102 or the HDD 103. The document evaluation apparatus 100 also includes a training data generating unit 124, a machine learning unit 125, a characteristics extracting unit 126, an evaluating unit 127, and a correcting unit 128. These processing units are implemented, for example, using programs executed by the CPU 101.

The document storing unit 121 stores therein past documents, such as the document 133. The document storing unit 121 also stores an evaluation subject document, such as the document 135. The business operation information storing unit 122 stores therein business operation management tables, such as the ordering management table 141. The business operation management tables contain business operation information corresponding to the past documents and business operation information corresponding to the evaluation subject document. The business operation information includes results of business operations, such as the number of orders received, and may also include non-linguistic attributes. The model storing unit 123 stores the hypothesis table 144 as a model generated by machine learning. The hypothesis table 144 includes multiple hypotheses and the importance of each of the hypotheses.

The training data generating unit 124 generates training data, such as the training data table 142. At this time, the training data generating unit 124 extracts linguistic characteristics from the past documents stored in the document storing unit 121. The training data generating unit 124 also extracts non-linguistic attributes from the stored past documents or the business operation information corresponding to these documents, stored in the business operation information storing unit 122. In addition, the training data generating unit 124 extracts the identifier and result of each business operation from the business operation information, and generates a training label indicating the quality of its corresponding document based on the operation result.

Using machine learning, the machine learning unit 125 generates the hypothesis table 144 from the training data generated by the training data generating unit 124, and stores the hypothesis table 144 in the model storing unit 123. Here, Wide Learning, for example, is used as a machine learning technique. The machine learning unit 125 selects a combination of explanatory variables from a set of explanatory variables, including linguistic characteristics and non-linguistic attributes, and exhaustively generates hypotheses each associating the values of the selected explanatory variables and the value of the training label, which is the target variable. The machine learning unit 125 narrows down valid hypotheses based on the hit count and the hit rates of the exhaustively generated hypotheses. Further, the machine learning unit 125 calculates the importance of each of the narrowed-down, valid hypotheses.

The characteristics extracting unit 126 extracts linguistic characteristics from the evaluation subject document stored in the document storing unit 121. The characteristics extracting unit 126 also extracts non-linguistic attributes from the evaluation subject document or the business operation information corresponding to the evaluation subject document, stored in the business operation information storing unit 122. The characteristics extracting unit 126 generates the characteristics data 145 including the extracted linguistic characteristics and non-linguistic attributes.

Using the characteristics data 145 generated by the characteristics extracting unit 126 and the hypothesis table 144 stored in the model storing unit 123, the evaluating unit 127 calculates the evaluation value 146 of the evaluation subject document. At this time, the evaluating unit 127 selects each hypothesis whose hypothesis part fits the characteristics data 145 and includes one or more linguistic characteristics. The evaluating unit 127 corrects the importance of each of the selected hypotheses by comparing the linguistic characteristic condition clause included in the hypothesis with the characteristics data 145. Then, the evaluating unit 127 calculates the evaluation value 146 from the corrected importance.

The correcting unit 128 generates evaluation comments that propose approaches to correct the evaluation subject document, based on linguistic characteristics included in negative hypotheses amongst the hypotheses selected by the evaluating unit 127. The correcting unit 128 also highlights words corresponding to the linguistic characteristics in the evaluation subject document. The correcting unit 128 generates the correction screen 136 including the evaluation subject document together with the evaluation value 146 and the evaluation comments, and displays the generated correction screen 136 on the screen of the display device 111. Note that the correcting unit 128 may store the information included in the correction screen 136 in a non-volatile storage device, such as the HDD 103; output it to a different output device, such as a printer; or transmit it to a different information processor.

Next described are procedures implemented by the document evaluation apparatus 100.

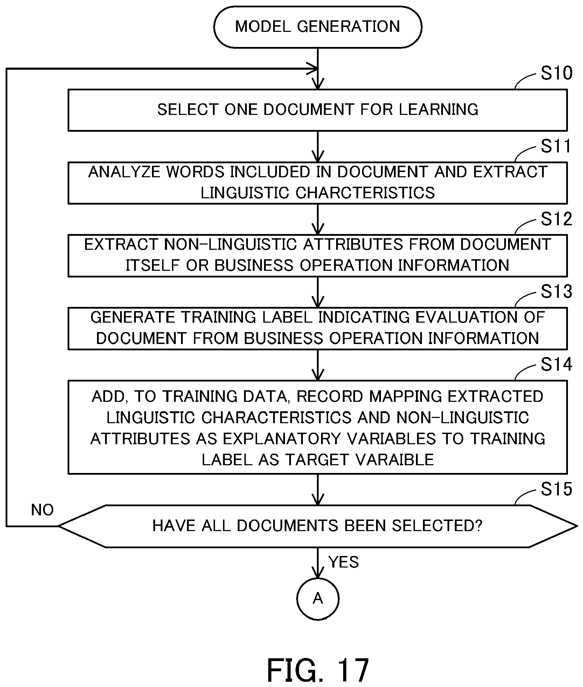

FIG. 17 is a flowchart illustrating an example of a model generation procedure.

(Step S10) The training data generating unit 124 selects one business operation identifier from business operation information stored in the business operation information storing unit 122. The training data generating unit 124 selects, for learning, a document corresponding to the selected business operation identifier amongst documents stored in the document storing unit 121.

(Step S11) The training data generating unit 124 analyzes words included in the selected document using a natural language processing technique, such as morphological analysis, and extracts linguistic characteristics, such as the adverb count, the conjunction count, the request expression count, the prohibited expression count, the passive voice count, and the numerical expression count. In detecting specific parts of speech and specific expressions, the training data generating unit 124 may refer to dictionaries.

(Step S12) The training data generating unit 124 extracts, from the selected document itself or business operation information external to the document, non-linguistic attributes, such as the operation category, the planned amount of money, and the scheduled period. In the case of extracting non-linguistic attributes from the document itself, the training data generating unit 124 is able to extract specific non-linguistic attributes according to specific header items in the format of the document.

(Step S13) With reference to the business operation information corresponding to the selected document, the training data generating unit 124 generates a training label indicating the evaluation of the selected document. The training label is a flag indicating either high evaluation (1) or low evaluation (0). The training data generating unit 124 is able to generate the training label based on the result of a business operation associated with the selected document, such as the received order count and the acceptance or rejection of a project.

(Step S14) The training data generating unit 124 sets each of the linguistic characteristics extracted in step S11 and the non-linguistic attributes extracted in step S12 as an explanatory variable, and sets the training label generated in step S13 as the target variable. The training data generating unit 124 adds, to training data, a record (sample) that maps the values of the multiple explanatory variables to the value of the target variable.

(Step S15) The training data generating unit 124 determines whether, in step S10, all business operation identifiers have been selected, that is, whether all documents stored in the document storing unit 121 have been selected. If all the business operation identifiers have been selected, the procedure moves to step S16; otherwise, returns to step S10.

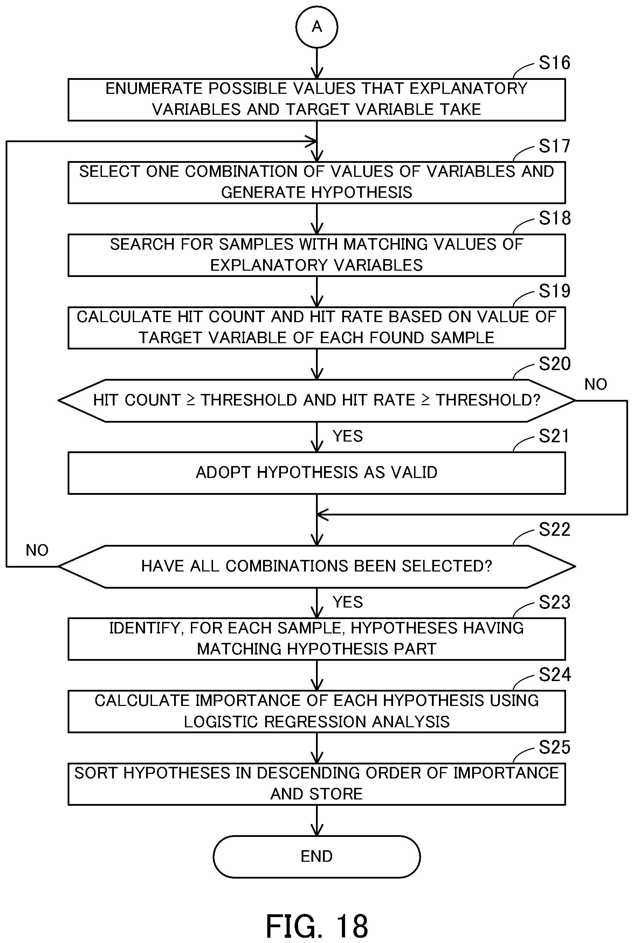

FIG. 18 is a flowchart illustrating the example of the model generation procedure, continuing from FIG. 17.

(Step S16) With reference to the training data, the machine learning unit 125 enumerates possible values that each of the explanatory variables and the target variable individually take. At this time, as for each explanatory variable whose possible values are not made up of a small number of discrete values, the machine learning unit 125 divides the value range of the explanatory variable into multiple intervals, and uses each interval as a "value of the explanatory variable" appearing in the text hereinafter. Explanatory variables subject to such a process of splitting the value range into intervals include those taking continuous values and those taking many possible discrete values.

(Step S17) The machine learning unit 125 selects, amongst the multiple explanatory variables, one combination of a predetermined number or less of explanatory variables. The machine learning unit 125 generates one hypothesis by selecting one combination made up of values of the individual explanatory variables and a value of the target variable. The hypothesis part of the generated hypothesis represents a condition specified by the values of the explanatory variables, and the conclusion part of the hypothesis indicates the value of the target variable.

(Step S18) The machine learning unit 125 searches the training data for samples each having values of the explanatory variables that match the condition specified in the hypothesis part of the hypothesis generated in step S17.

(Step S19) The machine learning unit 125 determines whether the value of the target variable of each of the samples found in step S18 matches the conclusion part of the hypothesis generated in step S17. The machine learning unit 125 calculates, as the hit count, the number of samples that match both the hypothesis part and the conclusion part of the hypothesis. In addition, the machine learning unit 125 calculates, as the hit rate, the ratio of the hit count above to the number of samples matching the hypothesis part of the hypothesis.

(Step S20) The machine learning unit 125 determines whether the hit count is greater than or equal to a threshold and the hit rate is greater than or equal to a threshold. The threshold of the hit count is predetermined as, for example, 10, and the threshold of the hit rate is predetermined as, for example, 80%. If the determination is affirmative, the procedure moves to step S21; otherwise, moves to step S22. Note that only either one of the hit count and the hit rate may be used in the determination of step S20.

(Step S21) The machine learning unit 125 adopts the hypothesis generated in step S17 as a valid hypothesis. Note that if the determination of step S20 is negative, the hypothesis is not adopted.

(Step S22) The machine learning unit 125 determines whether, in step S17, combinations of all explanatory variables and combinations of all values have been exhaustively selected. If the selection is exhaustive, the procedure moves to step S23; otherwise, returns to step S17.

(Step S23) For each of the multiple samples included in the training data, the machine learning unit 125 identifies, amongst the hypotheses adopted in step S21, hypotheses whose condition specified in the hypothesis part matches the values of the explanatory variables of the sample.

(Step S24) The machine learning unit 125 calculates a weight coefficient applied to each hypothesis based on the information obtained in step S23 using the logistic regression analysis given by Equation (1). The machine learning unit 125 adopts the weight coefficient as the importance of the hypothesis.

(Step S25) The machine learning unit 125 registers, in the hypothesis table 144, each hypothesis adopted in step S21 and its corresponding importance calculated in step S24 in association with each other. The machine learning unit 125 sorts the hypotheses registered in the hypothesis table 144 in descending order of importance. Then, the machine learning unit 125 stores the generated hypothesis table 144 in the model storing unit 123.

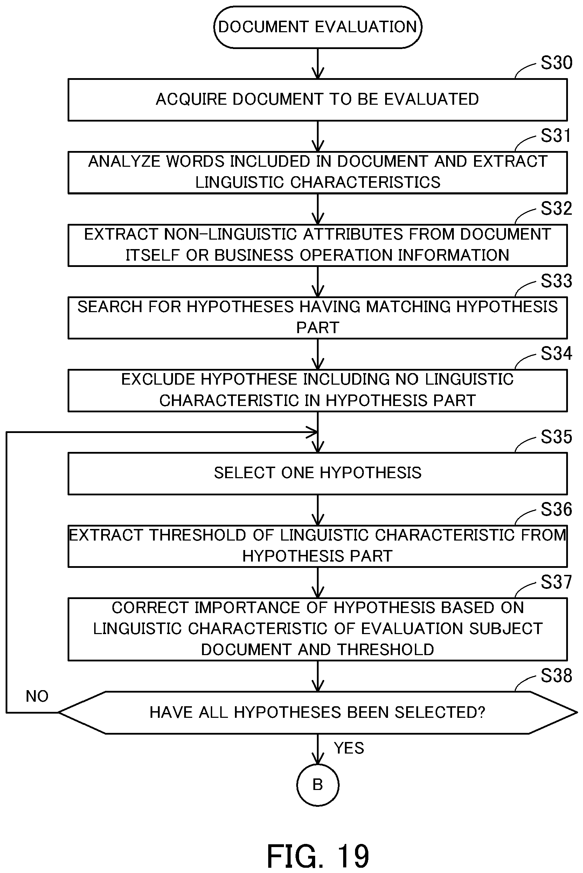

FIG. 19 is a flowchart illustrating an example of a document evaluation procedure.

(Step S30) The characteristics extracting unit 126 acquires the evaluation subject document from the document storing unit 121. The evaluation subject document may be specified by input from the user.

(Step S31) The characteristics extracting unit 126 analyzes words included in the evaluation subject document and extracts linguistic characteristics, such as the adverb count, the conjunction count, the request expression count, the prohibited expression count, the passive voice count, and the numerical expression count.

(Step S32) The characteristics extracting unit 126 extracts non-linguistic attributes, such as a business operation category, a planned amount of money, and a scheduled period, from the evaluation subject document itself or business operation information external to the evaluation subject document. The business operation information corresponding to the evaluation subject document is acquired from the business operation information storing unit 122. The characteristics extracting unit 126 generates the characteristics data 145 including the extracted linguistic characteristics and non-linguistic attributes.

(Step S33) The evaluating unit 127 searches the hypothesis table 144 stored in the model storing unit 123 for hypotheses whose condition specified in the hypothesis part matches the values of the explanatory variables of the characteristics data 145.

(Step S34) The evaluating unit 127 excludes, amongst the hypotheses found in step S33, those including no linguistic characteristic in the hypothesis part (i.e., hypotheses with the hypothesis part including only non-linguistic attributes).

(Step S35) The evaluating unit 127 selects one hypothesis that remains without being excluded.

(Step S36) The evaluating unit 127 extracts the threshold of the linguistic characteristic from the hypothesis part of the selected hypothesis.

(Step S37) The evaluating unit 127 reads the importance of the selected hypothesis from the hypothesis table 144. The evaluating unit 127 calculates a correction coefficient by comparing the threshold extracted in step S36 and the value of the linguistic characteristic included in the characteristics data 145, and then obtains corrected importance by multiplying the importance by the correction coefficient. The correction coefficient is, for example, the ratio of the value of the characteristics data 145 to the threshold.

(Step S38) The evaluating unit 127 determines whether, in step S35, all hypotheses have been selected. If all the hypotheses have been selected, the procedure moves to step S39; otherwise, returns to step S35.

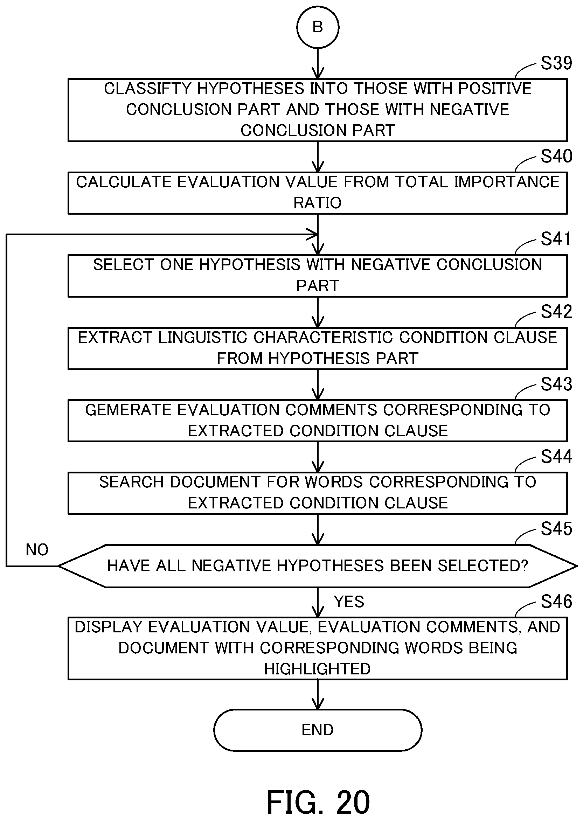

FIG. 20 is a flowchart illustrating the example of the document evaluation procedure, continuing from FIG. 19.

(Step S39) The evaluating unit 127 classifies the remaining hypotheses into those with the conclusion part being positive (1) and those with the conclusion part being negative (0). Each positive hypothesis is associated with high evaluation, such as many received orders and adoption of a project. Each negative hypothesis is associated with low evaluation, such as few received orders and rejection of a project.

(Step S40) The evaluating unit 127 calculates total importance Fpos, which is the sum of the corrected importance of the positive hypotheses, and total importance Fneg, which is the sum of the corrected importance of the negative hypotheses. The evaluating unit 127 calculates the evaluation value 146 from the ratio of the total importance Fpos and the total importance Fneg. For example, the evaluation value 146 is obtained as: Fpos/(Fpos + Fneg).

(Step S41) The correcting unit 128 selects one hypothesis with a negative conclusion part.

(Step S42) the correcting unit 128 extracts a linguistic characteristic condition clause from the hypothesis part of the selected hypothesis.

(Step S43) The correcting unit 128 generates evaluation comments corresponding to the linguistic characteristic condition clause extracted in step S42. For example, for a condition clause that the value of the linguistic characteristic is greater than or equal to a threshold, the correcting unit 128 raises the possibility that inclusion of many words of the linguistic characteristic could give low evaluation.

(Step S44) The correcting unit 128 searches the evaluation subject document for words that correspond to the above linguistic characteristic condition clause. For example, in the case where the linguistic characteristic is the conjunction count, the correcting unit 128 searches for conjunctions.

(Step S45) The correcting unit 128 determines whether, in step S41, all hypotheses with a negative conclusion part have been selected. If the determination is affirmative, the procedure moves to step S46; otherwise, returns to step S41.

(Step S46) The correcting unit 128 generates the correction screen 136 including the evaluation value 146 calculated in step S40, the evaluation comments generated in step S43, and the evaluation subject document where the words found in step S44 are highlighted, and displays the generated correction screen 136 on the screen of the display device 111.

As has been described above, the document evaluation apparatus 100 of the second embodiment defines a set of explanatory variables, which is a mix of both linguistic characteristics and non-linguistic attributes, and generates, from each past document related to a business operation, training data that maps values of explanatory variables to a value of the target variable. Here, the value of the target variable represents either high or low evaluation. Using the training data, the document evaluation apparatus 100 generates, by machine learning, a model including multiple hypotheses each of which has a combination of values of several explanatory variables as its hypothesis part and high or low evaluation as its conclusion part. Then, the document evaluation apparatus 100 selects, amongst the generated hypotheses, one or more hypotheses each of which is applicable to the evaluation subject document and includes at least one linguistic characteristic in its hypothesis part. Using the selected hypotheses, the document evaluation apparatus 100 calculates an evaluation value.

As a result, the calculated evaluation value takes into account non-linguistic attributes of the evaluation subject document, thereby providing higher accuracy than the case of using a model not including non-linguistic attributes as explanatory variables. In addition, the use of a set of explanatory variables, which is a mix of linguistic characteristics and non-linguistic attributes, eliminates the need of generating a different model for each value of the non-linguistic attributes, which results in reduced cost of model generation using machine learning. Especially, this helps reduce the amount of learning documents prepared. Further, in calculating the evaluation value, each hypothesis including no linguistic characteristic in its hypothesis part is excluded. These hypotheses could lead to an evaluation irrelevant to the writing style of the evaluation subject document but solely based on the nature of the business operation, and are therefore not suitable to be used for evaluation of the evaluation subject document. Therefore, exclusion of such hypotheses provides the evaluation value with higher accuracy.

Non-linguistic attributes are automatically extracted from documents themselves or externally-existing business operation information associated with the documents. In addition, training labels are automatically generated based on the associated externally-existing business operation information. Therefore, the training data is readily generated. Further, the importance defined in the model is corrected according to how much each linguistic characteristic of the evaluation subject document deviates from the acceptable range specified in the hypothesis part of a hypothesis corresponding to the importance. This allows unfavorable aspects of the evaluation subject document to be emphasized, thereby providing the evaluation value with higher accuracy.

As the evaluation value, a numerical value of 0% or more and 100% or less is calculated instead of using two levels of evaluation, high and low. This makes it easier for the user to understand how much impact the writing style of the evaluation subject document has over the business operation result. In addition, words corresponding to linguistic characteristics responsible for lowering the evaluation value are highlighted in the evaluation subject document. This facilitates the user to modify the evaluation subject document so as to attain a high evaluation value.

The foregoing is merely illustrative of the principles of the present invention. Further, numerous modifications and changes will readily occur to those skilled in the art, and therefore, it is not desired to limit the disclosed technology to the exact construction and applications illustrated and described above. Accordingly, all suitable modifications and equivalents may be resorted to, falling within the scope of the present invention determined by appended claims and their equivalents.

Reference Signs List

| 10 | document evaluation apparatus |
| 11 | storing unit |
| 12 | processing unit |
| 13 | evaluation subject document |
| 14a, 14b, 14c | judgement rules |
| 15 | evaluation result |

**Claims**

1.  A document evaluation program that causes a computer to execute a process comprising:

    acquiring a plurality of judgement rules, each of which associates a condition for values of one or more characteristic variables with a document evaluation result, the one or more characteristic variables being amongst a plurality of characteristic variables that includes one or more first characteristic variables each indicating an occurrence frequency of words in a document and one or more second characteristic variables each indicating an attribute of a business operation corresponding to a document;
    calculating values of the plurality of characteristic variables corresponding to an evaluation subject document;
    selecting, amongst the plurality of judgement rules, a judgement rule whose condition matches the calculated values of the evaluation subject document and includes at least one of the one or more first characteristic variables; and
    generating an evaluation result of the evaluation subject document based on the selected judgement rule.

2.  The document evaluation program according to claim 1, wherein:
    the one or more first characteristic variables include a characteristic variable indicating a count of words of a predetermined type included in the document, and the one or more second characteristic variables include at least one of a characteristic variable indicating a planned amount of money of the corresponding business operation and a characteristic variable indicating a scheduled period of the corresponding business operation.

3.  The document evaluation program according to claim 1, wherein:
    the calculating of the values of the plurality of characteristic variables corresponding to the evaluation subject document includes calculating values of the one or more first characteristic variables by analyzing the evaluation subject document and calculating values of the one or more second characteristic variables by referring to business operation information external to the evaluation subject document.

4.  The document evaluation program according to claim 1, wherein:
    the condition of the selected judgement rule represents a combination of a condition for a value of the at least one of the one or more first characteristic variables and a condition for a value of at least one of the one or more second characteristic variables.

5.  The document evaluation program according to claim 1, wherein:

    each of the plurality of judgement rules is given an importance score, and
    the generating includes calculating an evaluation value using the importance score given to the selected judgement rule and including the evaluation value in the evaluation result.

6.  The document evaluation program according to claim 5, wherein:
    the generating of the evaluation result of the evaluation subject document includes extracting, from the condition of the selected judgement rule, a threshold of the at least one of the one or more first characteristic variables, correcting the importance score given to the selected judgement rule based on a value of the at least one of the one or more first characteristic variables of the evaluation subject document and the threshold, and calculating the evaluation value using the corrected importance score.

7.  The document evaluation program according to claim 1, wherein:

the generating of the evaluation result of the evaluation subject document includes searching the evaluation subject document to find words corresponding to the at least one of the one or more first characteristic variables and causing the found words to appear highlighted.

8. The document evaluation program according to claim 1, wherein:
the process further includes:

generating, from a plurality of sample documents, training data including a plurality of records, each of which includes values of the plurality of characteristic variables and a training label indicating an evaluation result, and generating, from the training data, the plurality of judgement rules by analyzing correlations between subsets of the plurality of characteristic variables and the training label.

9. A document evaluation method executed by a computer, the document evaluation method comprising:

acquiring a plurality of judgement rules, each of which associates a condition for values of one or more characteristic variables with a document evaluation result, the one or more characteristic variables being amongst a plurality of characteristic variables that includes one or more first characteristic variables each indicating an occurrence frequency of words in a document and one or more second characteristic variables each indicating an attribute of a business operation corresponding to a document;
calculating values of the plurality of characteristic variables corresponding to an evaluation subject document;
selecting, amongst the plurality of judgement rules, a judgement rule whose condition matches the calculated values of the evaluation subject document and includes at least one of the one or more first characteristic variables; and
generating an evaluation result of the evaluation subject document based on the selected judgement rule.

10. A document evaluation apparatus comprising:

a storing unit for storing an evaluation subject document and a plurality of judgement rules, each of which associates a condition for values of one or more characteristic variables with a document evaluation result, the one or more characteristic variables being amongst a plurality of characteristic variables that includes one or more first characteristic variables each indicating an occurrence frequency of words in a document and one or more second characteristic variables each indicating an attribute of a business operation corresponding to a document; and
a processing unit for calculating values of the plurality of characteristic variables corresponding to the evaluation subject document, selecting, amongst the plurality of judgement rules, a judgement rule whose condition matches the calculated values of the evaluation subject document and includes at least one of the one or more first characteristic variables, and generating an evaluation result of the evaluation subject document based on the selected judgement rule.

10

DOCUMENT EVALUATION APPARATUS

STORING UNIT 11

EVALUATION SUBJECT DOCUMENT 13

| COUNT OF SPECIFIC PART OF SPEECH (v1) | 2 |
|---|---|
| COUNT OF SPECIFIC EXPRESSION (v2) | 6 |
| PREDETERMINED PRICE (v3) | ¥150 |
| SCHEDULED PERIOD (v4) | 3 DAYS |

EVALUATION ERSULT 15
LOW EVALUATION

14a $v2 \geqq 4$ & $v4 \leqq 3$ DAYS $\Rightarrow$ LOW EVALUATION

14b $v1 \geqq 4$ & $v3 \geqq ¥100$ $\Rightarrow$ HIGH EVALUATION

14c $v3 \geqq ¥100$ & $v4 \geqq 3$ DAYS $\Rightarrow$ HIGH EVALUATION

...

JUDGEMENT RULES

PROCESSING UNIT 12

FIG. 1

DOCUMENT EVALUATION APPARATUS 100

| | 101 | | | 104 |
|---|---|---|---|---|
| CPU | | | IMAGE INTERFACE | |

DISPLAY DEVICE 111

| | 102 | | | 105 |
|---|---|---|---|---|
| RAM | | | INPUT DEVICE INTERFACE | |

INPUT DEVICE 112

| | 103 | | | 106 |
|---|---|---|---|---|
| HDD | | | MEDIA READER | |

STORAGE MEDIUM 113

| | | | 107 |
|---|---|---|---|
| | | COMMUNI- CATION INTERFACE | |

NETWORK 114

BUS

# FIG. 2

DOCUMENT (ORDERING DOCUMENT)  ⌐131

Please develop a function capable of shipment, evaluation, and sales management in response to a successful bid.

Previous experience in similar development tasks would be advantageous.

The development has partially been completed, and **you are requested** to make additional customization and maintenance.

Please check the current status of the function.

Please develop a function capable of bulk shipment notifications.

You are also **requested** to build a sales profit management function.

Please also develop a new listing mechanism within the tool.

You are also **asked** to set up automatic new listings and insert images to a narrative text.

You are kindly **requested** to deliver the above tasks as soon as possible.

# FIG. 3

DOCUMENT (ORDERING DOCUMENT) 132

We are looking for engineers who can help us in development using macros.

We extract numerical figures of budget control tables from a database, using spreadsheet software.

**You are requested** to create a function to directly send, to the database, values entered by the user in business forms in spreadsheet software to the extracted data.

You need to use functions unique to database software in some parts.

∗ **Please** see the attached file for a reference.

**You are** kindly **requested** to first review specifications and design documents to identify the general outline of the task.

The planned delivery period is about 2 months, and we **would like you** to help us in a series of steps, from research, design, development, test, and validation through to release.

We plan to enter the design phase right away from the start of next week.

Therefore, **please** research specifications of current development tools and existing functions.

∗ For further details of the specifications, **please** review the attached specifications and design documents.

**Please** let us know if you have any questions.

# FIG. 4

DOCUMENT (ORDERING DOCUMENT) 133

▽Task Details

Share one of your "recommended autumn leaf viewing spots" in Tokyo with us.

It does not matter whether it is famous or not; **please refrain** from referring to a place you have never been.

Please write in as if you were answering to the question from your friend, "What is the one spot for colored leaves you recommend?"

Please write **briefly**, if you like, the reason you recommend the spot.

**But** it is **preferably** no less than 800 characters long.

Copying and pasting articles from other sources is **forbidden**.

Please note that discriminatory content is **not allowed**.

**So** we look forward to hearing from a lot of you.

# FIG. 5

ORDERING MANAGEMENT TABLE ⌐141

| ORDER ID | CATEGORY | ORDERING PRICE | DELIVERY TIME | NUMBER OF ORDERS RECEIVED |
|---|---|---|---|---|
| 001 | BLOG ARTICLE CREATION | ¥80 | 1 DAY | 1 |
| 002 | BLOG ARTICLE CREATION | ¥150 | 3 DAYS | 10 |
| 003 | DATA COLLECTION | ¥1,000 | 5 DAYS | 3 |
| ... | ... | ... | ... | ... |

# FIG. 6

TRAINING DATA TABLE

| ORDER ID | NON-LINGUISTIC ATTRIBUTE | | | LINGUISTIC CHARACTERISTIC | | | | TRAINING LABEL |
|---|---|---|---|---|---|---|---|---|
| | CATEGORY | ORDERING PRICE | DELIVERY TIME | LENGTH | ADVERB COUNT | CONJUNC-TION COUNT | PROHIBITED EXPRESSION COUNT | |
| 001 | BLOG ARTICLE CREATION | ¥80 | 1 DAY | 215 | 2 | 2 | 3 | FEW (0) |
| 002 | BLOG ARTICLE CREATION | ¥150 | 3 DAYS | 220 | 2 | 4 | 4 | MANY (1) |
| 003 | DATA COLLECTION | ¥1,000 | 5 DAYS | 300 | 3 | 4 | 3 | FEW (0) |
| ... | ... | ... | ... | ... | ... | ... | ... | ... |

142

FIG. 7

EP 4 116 898 A1

DOCUMENT (PROPOSAL DOCUMENT) ⟋ 134

Regarding call center outsourcing

● Proposal type

Entrustment of operations

● Outline of proposal

To switch internal call center operations to outsourcing.

●Background

In recent years, there has been a **quite** pronounced tendency to outsource call center operations.

This is because the call center operations are **exceptionally** difficult to equalize, for example, being busy right after a product launch, and hard to secure adequate factors. Another reason is that the operations take a considerable amount of time and expense to train skilled human resources on their own.

For these reasons, it is becoming a common perception in the industry in recent years that it is easier to handle business operations by contracting out work that can be outsourced.

● Effect

In companies like ours with more than **50 types** of products, outsourcing would help us adjust the volume of operations according to the sales plans. As a result, it **is considered** more advantageous to outsource the call center operations.

● Introduction time

Within 3 months

● Outsourcing expenses

20 million yen per year

# FIG. 8

TRAINING DATA TABLE

<span>143</span>

| PROPOSAL ID | NON-LINGUISTIC ATTRIBUTE | | | LINGUISTIC CHARACTERISTIC | | | | TRAINING LABEL |
|---|---|---|---|---|---|---|---|---|
| | CATEGORY | BUDGETED AMOUNT | PREPA-RATION PERIOD | LENGTH | ADVERB COUNT | PASSIVE VOICE COUNT | NUMERICAL EXPRESSION COUNT | |
| 101 | ENTRUSTMENT OF OPERATIONS | ¥20,000,000 | 3 MONTHS | 300 | 2 | 1 | 1 | ACCEPTED (1) |
| 102 | EVENT HOLDING | ¥5,000,000 | 1 MONTH | 100 | 5 | 7 | 2 | REJECTED (0) |
| 103 | PRODUCT PLANNING | ¥100,000,000 | 12 MONTHS | 550 | 3 | 3 | 6 | ACCEPTED (1) |
| ... | ... | ... | ... | ... | ... | ... | ... | ... |

FIG. 9

EP 4 116 898 A1

HYPOTHESIS TABLE

144

| HYPOTHESIS | IMPORTANCE |
|---|---|
| BLOG ARTICLE CREATION ∧ CONJUNCTION COUNT≦2 → MANY | 0.85 |
| BLOG ARTICLE CREATION ∧ DELIVERY TIME≦2 DAYS ∧ PROHIBITED EXPRESSION COUNT≧4 → FEW | 0.80 |
| DATA COLLECTION ∧ ORDERING PRICE≦¥100 ∧ LENGTH≧250 → FEW | 0.70 |
| DATA COLLECTION ∧ DELIVERY TIME≦2 DAYS ∧ CONJUNCTION COUNT≧5 → MANY | 0.65 |
| BLOG ARTICLE CREATION ∧ ORDERING PRICE≧¥100 → MANY | 0.50 |
| ... | ... |

# FIG. 10

DOCUMENT (ORDERING DOCUMENT) 135

We are looking for people who can write an article about the final episode of the drama "BB" starring AA, which was broadcast in 2016.

We would like you to write a synopsis, your impressions, highlights, etc.

■ Description of work

Please write an article according to a headline we specify.

■ Special notes

**Please refrain** from applying if you have not watched the drama.

The act of copying and pasting is **prohibited**. You are urged to write in your own words **as much as possible**.

Copying and pasting articles from other sites is **forbidden**.

**And** reuse of articles delivered in the past is **not allowed**.

We use a checker tool for detecting copy and paste plagiarism and rewrites of other materials.

**Please abstain** from negative writing.

Ensure that you **definitely** use positive language in your writing.

Defamatory statements and violent expressions are **proscribed**.

The number of characters, such as (300 characters), for each heading is **just** a guide.

**So** write more if you wish.

We will offer an additional bonus if the text of your article exceeds 1500 characters and, **at the same time**, is rich in content.

# FIG. 11

CHARACTERISTICS DATA                    145

| ORDER ID | | 301 |
|---|---|---|
| NON-LINGUISTIC ATTRIBUTE | CATEGORY | BLOG ARTICLE CREATION |
| | ORDERING PRICE | ¥150 |
| | DELIVERY TIME | 1 DAY |
| LINGUISTIC CHARACTER-ISTIC | LENGTH | 150 |
| | ADVERB COUNT | 4 |
| | CONJUNCTION COUNT | 2 |
| | PROHIBITED EXPRESSION COUNT | 6 |

# FIG. 12

145

| NON–LINGUISTIC ATTRIBUTE | CATEGORY | BLOG ARTICLE CREATION |
|---|---|---|
| | ORDERING PRICE | ¥150 |
| | DELIVERY TIME | 1 DAY |
| LINGUISTIC CHARACTERISTIC | LENGTH | 150 |
| | ADVERB COUNT | 4 |
| | CONJUNCTION COUNT | 2 |
| | PROHIBITED EXPRESSION COUNT | 6 |

⇩

144

| HYPOTHESIS | IMPORTANCE |
|---|---|
| BLOG ARTICLE CREATION ∧ CONJUNCTION COUNT≦2 → MANY | 0.85 |
| BLOG ARTICLE CREATION ∧ DELIVERY TIME≦2 DAYS ∧ PROHIBITED EXPRESSION COUNT≧4 → FEW | 0.80 |
| DATA COLLECTION ∧ ORDERING PRICE≦¥100 ∧ LENGTH≧250 → FEW | 0.70 |
| DATA COLLECTION ∧ DELIVERY TIME≦2 DAYS ∧ CONJUNCTION COUNT≧5 → MANY | 0.65 |
| BLOG ARTICLE CREATION ∧ ORDERING PRICE≧¥100 → MANY | 0.50 |
| ... | ... |

—— HYPOTHESES MATCHING EVALUATION SUBJECT DOCUMENT

## FIG. 13

145

| LINGUISTIC CHARACTER- ISTIC | LENGTH | 150 |
|---|---|---|
| | ADVERB COUNT | 4 |
| | CONJUNCTION COUNT | 2 |
| | PROHIBITED EXPRESSION COUNT | 6 |

CORRECTION

| | | 144a |
|---|---|---|
| BLOG ARTICLE CREATION ∧ **CONJUNCTION COUNT≦2** → MANY | $0.85 \times 2/2 = 0.85$ | |
| BLOG ARTICLE CREATION ∧ DELIVERY TIME≦2 DAYS ∧ **PROHIBITED EXPRESSION COUNT≧4** → FEW | $0.80 \times 6/4 = 1.20$ | 144b |

146

| EVALUATION VALUE | $0.85/(0.85+1.20) = 41.4 \%$ |
|---|---|

FIG. 14

CORRECTION SCREEN 136

EVALUATION VALUE: 41. 4%

Many prohibited expressions are used. Reducing the number of prohibited expressions in the ordering document for blog article creation with short delivery time may help increase orders received.

We are looking for people who can write an article about the final episode of the drama "BB" starring AA, which was broadcast in 2016.

We would like you to write a synopsis, your impressions, highlights, etc.

■ Description of work

Please write an article according to a headline we specify.

■ Special notes

**Please refrain** from applying if you have not watched the drama.

The act of copying and pasting is **prohibited**. You are urged to write in your own words as much as possible.

Copying and pasting articles from other sites is **forbidden**.

And reuse of articles delivered in the past is **not allowed**.

We use a checker tool for detecting copy and paste plagiarism and rewrites of other materials.

**Please abstain** from negative writing.

Ensure that you definitely use positive language in your writing.

Defamatory statements and violent expressions are **proscribed**.

The number of characters, such as (300 characters), for each heading is just a guide. So write more if you wish.

We will offer an additional bonus if the text of your article exceeds 1500 characters and, at the same time, is rich in content.

# FIG. 15

DOCUMENT EVALUATION APPARATUS · 100

DOCUMENT STORING UNIT · 121

BUSINESS OPERATION INFORMATION STORING UNIT · 122

TRAINING DATA GENERATING UNIT · 124

CHARACTER-ISTICS EXTRACTING UNIT · 126

MACHINE LEARNING UNIT · 125

EVALUATING UNIT · 127

CORRECTING UNIT · 128

MODEL STORING UNIT · 123

FIG. 16

MODEL GENERATION

SELECT ONE DOCUMENT FOR LEARNING ⟋S10

ANALYZE WORDS INCLUDED IN DOCUMENT AND EXTRACT LINGUISTIC CHARCTERISTICS ⟋S11

EXTRACT NON-LINGUISTIC ATTRIBUTES FROM DOCUMENT ITSELF OR BUSINESS OPERATION INFORMATION ⟋S12

GENERATE TRAINING LABEL INDICATING EVALUATION OF DOCUMENT FROM BUSINESS OPERATION INFORMATION ⟋S13

ADD, TO TRAINING DATA, RECORD MAPPING EXTRACTED LINGUISTIC CHARACTERISTICS AND NON-LINGUISTIC ATTRIBUTES AS EXPLANATORY VARIABLES TO TRAINING LABEL AS TARGET VARAIBLE ⟋S14

NO HAVE ALL DOCUMENTS BEEN SELECTED? ⟋S15

YES

A

FIG. 17

A

ENUMERATE POSSIBLE VALUES THAT EXPLANATORY VARIABLES AND TARGET VARIABLE TAKE —S16

SELECT ONE COMBINATION OF VALUES OF VARIABLES AND GENERATE HYPOTHESIS —S17

SEARCH FOR SAMPLES WITH MATCHING VALUES OF EXPLANATORY VARIABLES —S18

CALCULATE HIT COUNT AND HIT RATE BASED ON VALUE OF TARGET VARIABLE OF EACH FOUND SAMPLE —S19

HIT COUNT ≥ THRESHOLD AND HIT RATE ≥ THRESHOLD? —S20    NO

YES    S21

ADOPT HYPOTHESIS AS VALID

NO    HAVE ALL COMBINATIONS BEEN SELECTED? —S22

YES    S23

IDENTIFY, FOR EACH SAMPLE, HYPOTHESES HAVING MATCHING HYPOTHESIS PART

CALCULATE IMPORTANCE OF EACH HYPOTHESIS USING LOGISTIC REGRESSION ANALYSIS —S24

SORT HYPOTHESES IN DESCENDING ORDER OF IMPORTANCE AND STORE —S25

END

FIG. 18

```
        ┌─────────────────────────┐
        │  DOCUMENT EVALUATION    │
        └─────────────────────────┘
                    │
                    ▼                              ⌐S30
   ┌──────────────────────────────────────────────┐
   │        ACQUIRE DOCUMENT TO BE EVALUATED       │
   └──────────────────────────────────────────────┘
                    │
                    ▼                              ⌐S31
   ┌──────────────────────────────────────────────┐
   │  ANALYZE WORDS INCLUDED IN DOCUMENT AND       │
   │  EXTRACT LINGUISTIC CHARACTERISTICS           │
   └──────────────────────────────────────────────┘
                    │
                    ▼                              ⌐S32
   ┌──────────────────────────────────────────────┐
   │  EXTRACT NON-LINGUISTIC ATTRIBUTES FROM       │
   │  DOCUMENT ITSELF OR BUSINESS OPERATION        │
   │  INFORMATION                                   │
   └──────────────────────────────────────────────┘
                    │
                    ▼                              ⌐S33
   ┌──────────────────────────────────────────────┐
   │  SEARCH FOR HYPOTHESES HAVING MATCHING        │
   │  HYPOTHESIS PART                               │
   └──────────────────────────────────────────────┘
                    │
                    ▼                              ⌐S34
   ┌──────────────────────────────────────────────┐
   │  EXCLUDE HYPOTHESE INCLUDING NO LINGUISTIC    │
   │  CHARACTERISTIC IN HYPOTHESIS PART            │
   └──────────────────────────────────────────────┘
                    │
                    ▼                              ⌐S35
   ┌──────────────────────────────────────────────┐
   │             SELECT ONE HYPOTHESIS             │
   └──────────────────────────────────────────────┘
                    │
                    ▼                              ⌐S36
   ┌──────────────────────────────────────────────┐
   │  EXTRACT THRESHOLD OF LINGUISTIC              │
   │  CHARACTERISTIC FROM HYPOTHESIS PART          │
   └──────────────────────────────────────────────┘
                    │
                    ▼                              ⌐S37
   ┌──────────────────────────────────────────────┐
   │  CORRECT IMPORTANCE OF HYPOTHESIS BASED ON    │
   │  LINGUISTIC CHARACTERISTIC OF EVALUATION      │
   │  SUBJECT DOCUMENT AND THRESHOLD               │
   └──────────────────────────────────────────────┘
                    │
                    ▼                              ⌐S38
   NO  ◁─────────────────────────────────────────▷
        HAVE ALL HYPOTHESES BEEN SELECTED?
                    │
                    │ YES
                    ▼
                  ( B )
```

# FIG. 19

B

S39

CLASSIFTY HYPOTHESES INTO THOSE WITH POSITIVE CONCLUSION PART AND THOSE WITH NEGATIVE CONCLUSION PART

S40

CALCULATE EVALUATION VALUE FROM TOTAL IMPORTANCE RATIO

S41

SELECT ONE HYPOTHESIS WITH NEGATIVE CONCLUSION PART

S42

EXTRACT LINGUISTIC CHARACTERISTIC CONDITION CLAUSE FROM HYPOTHESIS PART

S43

GEMERATE EVALUATION COMMENTS CORRESPONDING TO EXTRACTED CONDITION CLAUSE

S44

SEARCH DOCUMENT FOR WORDS CORRESPONDING TO EXTRACTED CONDITION CLAUSE

S45

NO ◁ HAVE ALL NEGATIVE HYPOTHESES BEEN SELECTED?

YES S46

DISPLAY EVALUATION VALUE, EVALUATION COMMENTS, AND DOCUMENT WITH CORRESPONDING WORDS BEING HIGHLIGHTED

END

FIG. 20

## INTERNATIONAL SEARCH REPORT

| International application No. |
| --- |
| PCT/JP2020/009412 |

**A. CLASSIFICATION OF SUBJECT MATTER**
Int. Cl. G06Q10/06(2012.01)i, G06F40/247(2020.01)n
FI: G06Q10/06 300, G06F17/27 640

According to International Patent Classification (IPC) or to both national classification and IPC

**B. FIELDS SEARCHED**

Minimum documentation searched (classification system followed by classification symbols)
Int. Cl. G06Q10/06, G06F40/247

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-219715 A (PFU LTD.) 26 December 2019, entire text, all drawings | 1-10 |
| A | JP 2011-141766 A (TOSHIBA CORP.) 21 July 2011, entire text, all drawings | 1-10 |
| A | JP 2006-268744 A (TOSHIBA CORP.) 05 October 2006, entire text, all drawings | 1-10 |
| A | US 2008/0306784 A1 (RAJKUMAR, Vijay) 11 December 2008, entire text, all drawings | 1-10 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13.08.2020 | 25.08.2020 |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**INTERNATIONAL SEARCH REPORT**
Information on patent family members

International application No.

PCT/JP2020/009412

| Patent Documents referred to in the Report | Publication Date | Patent Family | Publication Date |
|---|---|---|---|
| JP 2019-219715 A | 26.12.2019 | (Family: none) | |
| JP 2011-141766 A | 21.07.2011 | (Family: none) | |
| JP 2006-268744 A | 05.10.2006 | US 2006/0218139 A1 | |
| US 2008/0306784 A1 | 11.12.2008 | (Family: none) | |

Form PCT/ISA/210 (patent family annex) (January 2015)

**EP 4 116 898 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017010249 A